(19) Europäisches Patentamt
European Patent Office
Office européen des brevets

(11) EP 3 992 218 A1

(12) # EUROPEAN PATENT APPLICATION
published in accordance with Art. 153(4) EPC

(43) Date of publication:
**04.05.2022 Bulletin 2022/18**

(21) Application number: **20831590.3**

(22) Date of filing: **24.06.2020**

(51) International Patent Classification (IPC):
***C08F 220/18*** *(2006.01)* ***C08F 222/02*** *(2006.01)*
***C08K 5/17*** *(2006.01)* ***C08K 5/3417*** *(2006.01)*
***C08K 5/36*** *(2006.01)* ***C08K 5/46*** *(2006.01)*
***C08L 33/06*** *(2006.01)* ***C09K 3/10*** *(2006.01)*

(52) Cooperative Patent Classification (CPC):
**C08F 220/18; C08F 222/02; C08K 5/17; C08K 5/3417; C08K 5/36; C08K 5/46; C08L 33/06; C09K 3/10**

(86) International application number:
**PCT/JP2020/024912**

(87) International publication number:
**WO 2020/262495 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 JP 2019122124**

(71) Applicant: **Zeon Corporation**
**Tokyo 100-8246 (JP)**

(72) Inventor: **BANDO, Fumiaki**
**Tokyo 100-8246 (JP)**

(74) Representative: **Ehlich, Eva Susanne**
**Maiwald Patentanwalts- und Rechtsanwaltsgesellschaft mbH**
**Elisenhof**
**Elisenstraße 3**
**80335 München (DE)**

(54) **ACRYLIC RUBBER, ACRYLIC RUBBER COMPOSITION, AND CROSSLINKED RUBBER**

(57) An acrylic rubber is provided, which comprises 20 to 35% by weight of ethyl methacrylate units (a), 0 to 20% by weight of ethyl acrylate units (b), 50 to 75% by weight of n-butyl acrylate units (c), and 0.5 to 4% by weight of carboxyl group-containing monomer units (d).

## Description

### TECHNICAL FIELD

The present invention relates to an acrylic rubber, and an acrylic rubber composition comprising the acrylic rubber, and a cross-linked rubber prepared by cross-linking the rubber composition.

### BACKGROUND ART

Acrylic rubbers prepared by polymerizing an alkyl acrylate ester alone or with an alkoxyalkyl acrylate ester are known as rubbers having cold resistance according to the usage environment and having high oil resistance, particularly high oil resistance under a high temperature. This leads to an increasing demand for these acrylic rubbers as automobile hoses, oil seals, O-rings, conveyor belts built in apparatuses and machines, and the like. Recently, rubber parts having further improved performance have been required due to severer conditions of thermal environments around internal combustion engines caused by the increased output of the internal combustion engines, countermeasures for exhaust gas, and the like and progression of degradation of the engine oil, which is used under a high temperature condition for a long time without exchanged while contacting heat, air, moisture, exhaust gas, and the like.

For example, Patent Document 1 discloses an acrylic copolymer containing a specific proportion of structural units derived from a specific acrylate ester, a specific proportion of structural units derived from a specific alkyl methacrylate ester, and a specific proportion of a constitutional unit derived from a cross-linkable monomer having a carboxy group. According to Patent Document 1, such an acrylic copolymer can ensure a cross-linked product having excellent normal state physical properties and high heat resistance under a high temperature for a long time while cold resistance or the like is not impaired.

### RELATED ART

### PATENT DOCUMENT

Patent Document 1: International Publication No. WO 2018/101146

### SUMMARY OF THE INVENTION

### PROBLEM TO BE SOLVED BY THE INVENTION

The present inventor, who has conducted research, has found that the acrylic copolymer disclosed in Patent Document 1 has insufficient resistance against degraded engine oil, and is susceptible to improvement.

The present invention has been made under such circumstances, and an object of the present invention is to provide an acrylic rubber which can ensure an excellent cross-linked rubber having a good balance among heat resistance, oil resistance, cold resistance, and resistance against degraded engine oil.

### MEANS FOR SOLVING THE PROBLEM

As a result of extensive research to achieve the above object, the present inventor has found that the problem above can be solved by selecting specific monomer units as monomer units which constitute an acrylic rubber and incorporating these specific monomer units in specific proportions, and has completed the present invention.

In other words, the present invention provides an acrylic rubber comprising 20 to 35% by weight of ethyl methacrylate units (a), 0 to 20% by weight of ethyl acrylate units (b), 50 to 75% by weight of n-butyl acrylate units (c), and 0.5 to 4% by weight of carboxyl group-containing monomer units (d).

Preferably, the acrylic rubber according to the present invention further comprises 0.01 to 10% by weight of 2-methoxyethyl acrylate units (e).

Moreover, the present invention provides an acrylic rubber composition comprising the acrylic rubber and an antioxidant, wherein the antioxidant is at least one selected from the group consisting of compounds represented by General Formulae (1) to (4) below, and the content of the antioxidant is 0.1 to 5 parts by weight relative to 100 parts by weight of the acrylic rubber:

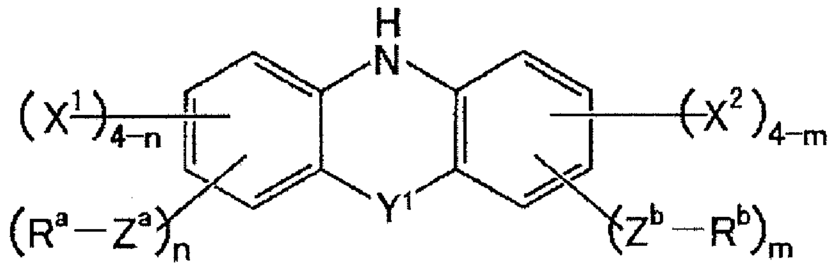

(1)

where, in General Formula (1), $Y^1$ represents a chemical single bond, - S(=O)-, or $-SO_2-$; $R^a$ and $R^b$ each independently represent a $C_1$ to $C_{30}$ organic group which may have a substituent; $Z^a$ and $Z^b$ each independently represent a chemical single bond or $-SO_2-$; $X^1$ and $X^2$ each independently represent a hydrogen atom, a halogen atom, a $C_1$ to $C_{10}$ alkyl group which may have a substituent, a cyano group, a nitro group, $-OR^1$, $-O-C(=O)-R^1$, $-C(=O)-OR^1$, - $O-C(=O)-OR^1$, $-NR^2(R^3)$, $-NR^2-C(=O)-R^1$, -C $(=O)-NR^2(R^3)$, or $-O-C(=O)-NR^2(R^3)$, where $R^1$, $R^2$, and $R^3$ each independently represent a hydrogen atom or a $C_1$ to $C_{20}$ organic group which may have a substituent; "n" and "m" each independently represent an integer of 0 to 2, and one of "n" and "m" is not 0; and when "n" and/or "m" is 2, two $R^a$s and two $R^b$s each may be the same or different;

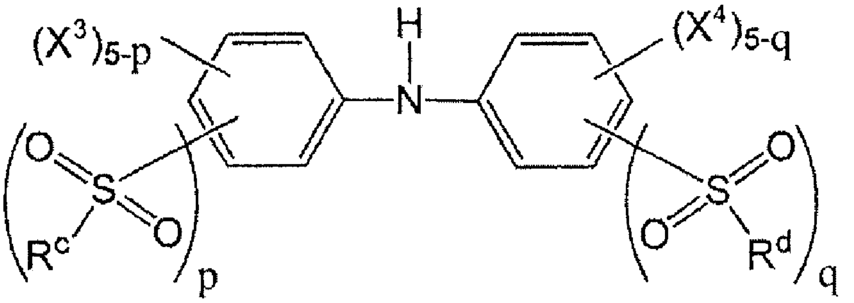

(2)

where, in General Formula (2), $R^c$ and $R^d$ each independently represent a $C_1$ to $C_{30}$ organic group which may have a substituent; $X^3$ and $X^4$ each independently represent a hydrogen atom, a halogen atom, a $C_1$ to $C_{10}$ alkyl group which may have a substituent, a cyano group, a nitro group, $-OR^4$, - $O-C(=O)-R^4$, $-C(=O)-OR^4$, -O-C(=O)-OR $^4$, $-NR^5(R^6)$, $-NR^5-C(=O)-R^4$, $-C(=O)-NR^5(R^6)$, or $-O-C(=O)-NR^5(R^6)$; where $R^4$, $R^5$, and $R^6$ each independently represent a hydrogen atom or a $C_1$ to $C_{20}$ organic group which may have a substituent; and "p" and "q" each independently represent 0 or 1, and at least one of "p" and "q" is 1;

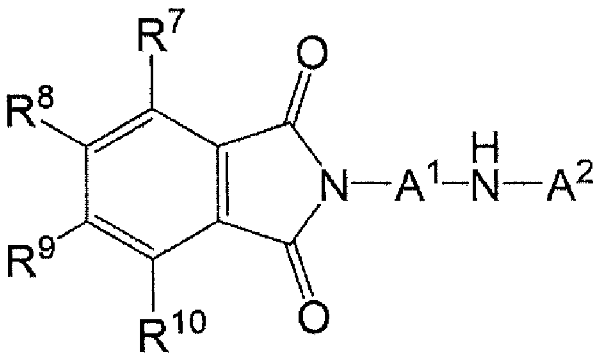

(3)

where, in General Formula (3), $A^1$ and $A^2$ each independently represent a $C_1$ to $C_{30}$ aromatic group which may have a substituent; $R^7$, $R^9$, and $R^{10}$ each independently represent a hydrogen atom, a halogen atom, a $C_1$ to $C_{10}$ alkyl group which may have a substituent, a cyano group, a nitro group, $-OR^{1a}$, - $O-C(=O)-R^{1a}$, $-C(=O)-OR^{1a}$, $-O-C(=O)-OR^{1a}$, $-NR^{1b}-C(=O)-R^{1a}$, -C $(=O)-NR^{1a}R^{1c}$, or $-O-C(=O)-NR^{1a}R^{1c}$; $R^{1a}$ and $R^{1c}$ each independently represent a hydrogen atom or a $C_1$ to $C_{30}$ organic group which may have a substituent; each $R^{1b}$ independently represents a hydrogen atom or a $C_1$ to $C_6$ alkyl group; the $C_1$ to $C_{30}$ organic group forming $R^{1a}$ and $R^{1c}$ may include at least one linking group selected from the group consisting of -O-, -S-, -O-C(=O)-, -C(=O)-O-, -O-C(=O)-O-, $-NR^{1d}-C(=O)-$, $-C(=O)-NR^{1d}-$, $-NR^{1d}-$, and -C(=O)-, except for the case where a linking group consisting of two or more adjacent -O- or -S- groups is included; each

$R^{1d}$ independently represents a hydrogen atom or a $C_1$ to $C_6$ alkyl group; $R^8$ represents a hydrogen atom, a halogen atom, a $C_1$ to $C_{10}$ alkyl group which may have a substituent, a cyano group, a nitro group, - O-C(=O)-$R^{1e}$, -C(=O)-O$R^{1e}$, -$NR^{1b}$-C(=O)-$R^{1e}$, -C(=O)-$NR^{1e}R^{1f}$, or -O-C(=O)-$NR^{1e}R^{1f}$; $R^{1e}$ and $R^{1f}$ each independently represent a $C_1$ to $C_{30}$ organic group which may have a substituent; the $C_1$ to $C_{30}$ organic group forming $R^{1e}$ and $R^{1f}$ may include at least one linking group selected from the group consisting of - O-, -S-, -O-C(=O)-, -C(=O)-O-, -O-C(=O)-O-, -$NR^{1d}$-C(=O)-, -C(=O)-$NR^{1d}$-, - $NR^{1d}$-, and -C(=O)-, except for the case where a linking group consisting of two or more adjacent -O- or -S- groups is included; and $R^{1b}$ and $R^{1d}$ each independently represent a hydrogen atom or a $C_1$ to $C_6$ alkyl group; and

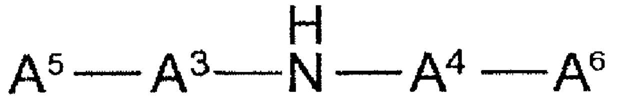
(4)

where, in General Formula (4), $A^3$ and $A^4$ each independently represent a $C_6$ to $C_{18}$ arylene group which may have a substituent, and $A^5$ and $A^6$ each independently represent an organic group having a cyclic imide structure which may have a substituent.

In the acrylic rubber composition according to the present invention, the content of the antioxidant is preferably 0.3 to 3.5 parts by weight relative to 100 parts by weight of the acrylic rubber.

In the acrylic rubber composition according to the present invention, the compound represented by General Formula (1) is preferably a compound represented by General Formula (9)

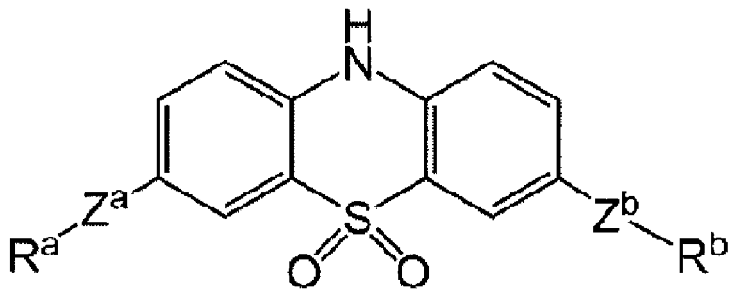
(9)

where, in General Formula (9), $R^a$ and $R^b$ each independently represent a $C_1$ to $C_{30}$ organic group which may have a substituent; and $Z^a$ and $Z^b$ each independently represent a chemical single bond or -$SO_2$-.

In the acrylic rubber composition according to the present invention, the compound represented by General Formula (2) is preferably a compound represented by General Formula (13):

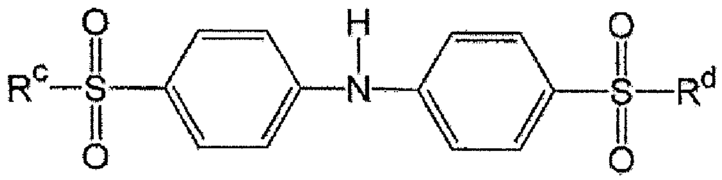
(13)

where, in General Formula (13), $R^c$ and $R^d$ each independently represent a $C_1$ to $C_{30}$ organic group which may have a substituent.

In the acrylic rubber composition according to the present invention, the compound represented by General Formula (3) is preferably a compound represented by General Formula (14):

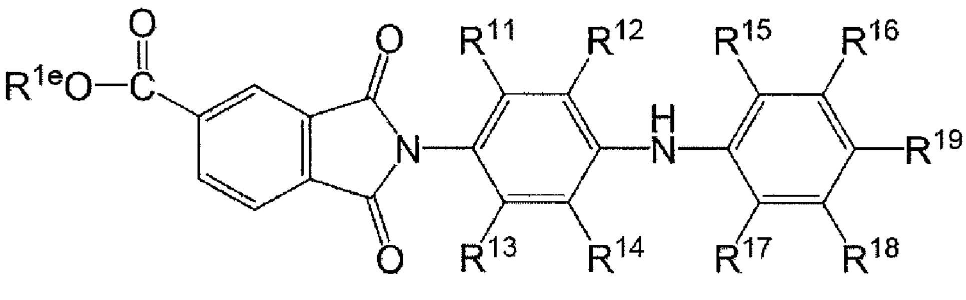
(14)

where, in General Formula (14), $R^{11}$ to $R^{19}$ each independently represent a hydrogen atom, a $C_1$ to $C_{10}$ alkyl group, a halogen-substituted $C_1$ to $C_{10}$ alkyl group, a halogen atom, a cyano group, or a nitro group; $R^{1e}$ represents a $C_1$ to $C_{30}$ organic group which may have a substituent; the $C_1$ to $C_{30}$ organic group forming $R^{1e}$ may include at least one linking group selected from the group consisting of -O-, -S-, -O-C(=O)-, -C(=O)-O-, -O-C(=O)-O-, $-NR^{1d}-C(=O)-$, $-C(=O)-NR^{1d}-$, $-NR^{1d}-$, and -C(=O)-, except for the case where a linking group consisting of two or more adjacent -O- or -S-groups is included; and each $R^{1d}$ independently represents a hydrogen atom or a $C_1$ to $C_6$ alkyl group.

In the acrylic rubber composition according to the present invention, the compound represented by General Formula (4) is preferably a compound represented by General Formula (24):

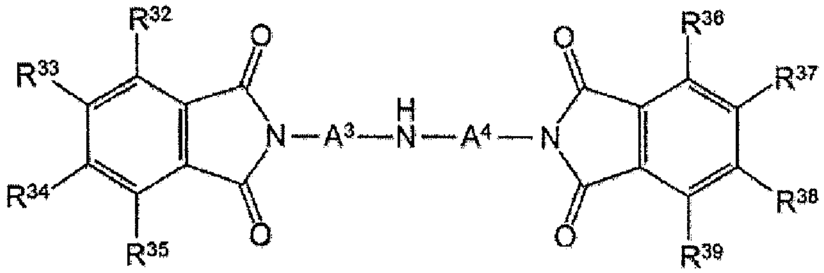

(24)

where, in General Formula (24), $R^{32}$ to $R^{39}$ each independently represent a hydrogen atom, a $C_1$ to $C_{30}$ alkyl group, a $C_1$ to $C_{30}$ alkenyl group, $-OR^{44}$, $-O-C(=O)-R^{44}$, $-C(=O)-OR^{44}$, $-C(=O)-NR^{44}(R^{45})$, $-NR^{44}-C(=O)-R^{45}$, -CN, $-SR^{44}$, $-S-(=O)-R^{44}$, or $-S(=O)_2-R^{44}$, and $R^{44}$ and $R^{45}$ each independently represent a $C_1$ to $C_{30}$ alkyl group, a $C_1$ to $C_{30}$ alkenyl group, or a $C_6$ to $C_{12}$ aromatic group; and $A^3$ and $A^4$ each independently represent a $C_6$ to $C_{18}$ arylene group which may have a substituent.

Preferably, the acrylic rubber composition according to the present invention further comprises 0.05 to 20 parts by weight of a cross-linking agent relative to 100 parts by weight of the acrylic rubber.

The present invention also provides a cross-linked rubber prepared by cross-linking the acrylic rubber composition described above.

The cross-linked rubber according to the present invention is preferably a hose material or a sealing material.

## ADVANTAGEOUS EFFECTS

The present invention can provide an acrylic rubber which can ensure an excellent cross-linked rubber having a good balance among heat resistance, oil resistance, cold resistance, and resistance against degraded engine oil, an acrylic rubber composition comprising the acrylic rubber, and a cross-linked rubber prepared by cross-linking the acrylic rubber composition.

## DESCRIPTION OF EMBODIMENTS

### <Acrylic rubber>

The acrylic rubber according to the present invention comprises 20 to 35% by weight of ethyl methacrylate units (a), 0 to 20% by weight of ethyl acrylate units (b), 50 to 75% by weight of n-butyl acrylate units (c), and 0.5 to 4% by weight of carboxyl group-containing monomer units (d).

In the acrylic rubber according to the present invention, the content of the ethyl methacrylate units (a) is 20 to 35% by weight, preferably 20 to 34% by weight, more preferably 20.5 to 32% by weight, still more preferably 21 to 30% by weight. A significantly small content of the ethyl methacrylate units (a) results in a cross-linked rubber having reduced heat resistance and reduced resistance against degraded engine oil. In contrast, a significantly large content of the ethyl methacrylate units (a) results in a cross-linked rubber having reduced cold resistance.

The content of the ethyl acrylate units (b) in the acrylic rubber according to the present invention is 0 to 20% by weight, preferably 1 to 19.5% by weight, more preferably 3 to 19% by weight, still more preferably 5 to 18.5% by weight. A significantly large content of the ethyl acrylate units (b) results in a cross-linked rubber having reduced resistance against degraded engine oil.

The content of the n-butyl acrylate units (c) in the acrylic rubber according to the present invention is 50 to 75% by weight, preferably 51 to 72% by weight, more preferably 52 to 70% by weight, still more preferably 53 to 67% by weight. A significantly small content of the n-butyl acrylate units (c) results in a cross-linked rubber having reduced cold resistance and reduced resistance against degraded engine oil. In contrast, a significantly large content of the n-butyl acrylate units (c) results in a cross-linked rubber having reduced heat resistance and reduced oil resistance.

The carboxyl group-containing monomer which forms the carboxyl group-containing monomer units (d) is not particularly limited, and α,β-ethylenically unsaturated carboxylic acids can be suitably used, for example. Examples of the α,β-ethylenically unsaturated carboxylic acids include $C_3$ to $C_{12}$ α,β-ethylenically unsaturated monocarboxylic acids, $C_4$ to $C_{12}$ α,β-ethylenically unsaturated dicarboxylic acids, monoesters of $C_4$ to $C_{12}$ α,β-ethylenically unsaturated dicarboxylic acids with $C_1$ to $C_8$ alkanols, and the like. An acrylic rubber which contains α,β-ethylenically unsaturated carboxylic acid monomer units is preferred because such an acrylic rubber can have carboxyl groups as cross-linking points, thereby further enhancing the compression set resistance of the resulting cross-linked rubber.

Examples of the $C_3$ to $C_{12}$ α,β-ethylenically unsaturated monocarboxylic acid include acrylic acid, methacrylic acid, α-ethylacrylic acid, crotonic acid, cinnamic acid, and the like.

Examples of the $C_4$ to $C_{12}$ α,β-ethylenically unsaturated dicarboxylic acids include butenedioic acids such as fumaric acid and maleic acid; itaconic acid; citraconic acid; chloromaleic acid; and the like.

Examples of the monoesters of $C_4$ to $C_{12}$ α,β-ethylenically unsaturated dicarboxylic acids with $C_1$ to $C_8$ alkanols include mono-alkyl chain esters of butenedioic acids, such as monomethyl fumarate, monoethyl fumarate, mono-n-butyl fumarate, monomethyl maleate, monoethyl maleate, and mono-n-butyl maleate; butenedioic acid monoesters having an alicyclic structure, such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

The carboxyl group-containing monomer is preferably an α,β-ethylenically unsaturated carboxylic acid, more preferably a monoester of a $C_4$ to $C_{12}$ α,β-ethylenically unsaturated dicarboxylic acid with a $C_1$ to $C_8$ alkanol, particularly preferably a mono-alkyl chain ester of butenedioic acid, or a butenedioic acid monoester having an alicyclic structure. Preferred examples thereof specifically include mono-n-butyl fumarate, mono-n-butyl maleate, monocyclohexyl fumarate, monocyclohexyl maleate, and the like. Particularly preferred is mono-n-butyl maleate. These α, β-ethylenically unsaturated carboxylic acid monomers can be used alone or in combination. Among the monomers listed above, the dicarboxylic acids include anhydrides thereof.

The content of the carboxyl group-containing monomer units (d) is 0.5 to 4% by weight, preferably 0.6 to 3.5% by weight, more preferably 0.7 to 3.0% by weight. A significantly small content of the carboxyl group-containing monomer units (d) results in a cross-linked rubber having reduced compression set resistance. In contrast, a significantly large content of the carboxyl group-containing monomer units (d) results in a cross-linked rubber having reduced heat resistance and reduced hydrolysis resistance.

Preferably, the acrylic rubber according to the present invention further comprises 2-methoxyethyl acrylate units (e) in addition to the ethyl methacrylate units (a), the ethyl acrylate units (b), the n-butyl acrylate units (c), and the carboxyl group-containing monomer units (d). If the 2-methoxyethyl acrylate units (e) is further contained, further enhanced cold resistance of the resulting cross-linked rubber can be ensured.

The content of the 2-methoxyethyl acrylate units (e) is preferably 0.01 to 10% by weight, more preferably 0.5 to 9% by weight, more preferably 1 to 8% by weight. If the content of the 2-methoxyethyl acrylate units (e) is within this range, the resulting cross-linked rubber has higher cold resistance and higher oil resistance.

In addition to the ethyl methacrylate units (a), the ethyl acrylate units (b), the n-butyl acrylate units (c), the carboxyl group-containing monomer units (d), and the optional 2-methoxyethyl acrylate units (e), the acrylic rubber according to the present invention may have other monomer units copolymerizable therewith as needed.

Examples of such other copolymerizable monomers include, but should not be limited to, (meth)acrylic acid esters other than ethyl methacrylate, ethyl acrylate, n-butyl acrylate, and 2-methoxyethyl acrylate; cross-linkable monomers other than carboxyl group-containing monomers; aromatic vinyl monomers; α,β-ethylenically unsaturated nitrile monomers; monomers having two or more (meth)acryloyloxy groups (hereinafter, referred to as "polyfunctional (meth)acrylic monomers" in some cases); olefin monomers; α,β-ethylenically unsaturated dicarboxylic acid diester monomers; vinyl ester compounds; vinyl ether compounds; and the like.

Examples of the (meth)acrylic acid esters other than ethyl methacrylate, ethyl acrylate, n-butyl acrylate, and 2-methoxyethyl acrylate include, but should not be limited to, alkyl (meth)acrylate ester monomers other than ethyl methacrylate, ethyl acrylate, and n-butyl acrylate, alkoxyalkyl (meth)acrylate ester monomers other than 2-methoxyethyl acrylate, and the like.

The alkyl (meth)acrylate ester monomers other than ethyl methacrylate, ethyl acrylate and n-butyl acrylate are not particularly limited, and are preferably esters of $C_1$ to $C_8$ alkanols with (meth)acrylic acid. Specifically, examples thereof include methyl (meth)acrylate, n-propyl (meth)acrylate, isopropyl (meth)acrylate, n-butyl methacrylate, isobutyl (meth)acrylate, n-hexyl (meth)acrylate, 2-ethylhexyl (meth)acrylate, cyclohexyl (meth)acrylate, and the like. Among these, preferred are methyl (meth)acrylate and n-butyl methacrylate, and particularly preferred are methyl methacrylate and n-butyl methacrylate. These can be used alone or in combination.

The alkoxyalkyl (meth)acrylate ester monomers other than 2-methoxyethyl acrylate are not particularly limited, and are preferably esters of $C_2$ to $C_8$ alkoxy alkyl alcohols with (meth)acrylic acid. Specifically, examples thereof include methoxymethyl methacrylate, ethoxymethyl (meth)acrylate, 2-methoxyethyl methacrylate, 2-ethoxyethyl (meth)acrylate,

2-propoxyethyl (meth)acrylate, 2-butoxyethyl (meth)acrylate, 3-methoxypropyl (meth)acrylate, and 4-methoxybutyl (meth)acrylate, and the like. Among these, preferred are 2-ethoxyethyl (meth)acrylate and 2-methoxyethyl methacrylate, and particularly preferred is 2-ethoxyethyl acrylate. These can be used alone or in combination.

Examples of the cross-linkable monomers other than carboxyl group-containing monomers include, but should not be limited to, monomers having an epoxy group; monomers having a halogen atom; diene monomers; and the like. These cross-linkable monomers can be used alone or in combination.

Examples of the monomers having an epoxy group include, but should not be limited to, epoxy group-containing (meth)acrylic acid esters, epoxy group-containing ethers, and the like.

Specific examples of the epoxy group-containing (meth)acrylic acid esters include glycidyl (meth)acrylate, and the like.

Specific examples of the epoxy group-containing ethers include allyl glycidyl ether, vinyl glycidyl ether, and the like. Among these, preferred are glycidyl methacrylate and allyl glycidyl ether. These monomers having an epoxy group can be used alone or in combination.

Examples of the monomers having a halogen atom include, but should not be limited to, unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, halogenated vinyl compounds, and the like.

Specific examples of the unsaturated alcohol esters of halogen-containing saturated carboxylic acids include vinyl chloroacetate, vinyl 2-chloropropionate, allyl chloroacetate, and the like.

Specific examples of the haloalkyl (meth)acrylates include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate, and the like.

Specific examples of the haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of the (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of the halogen-containing unsaturated ethers include chloromethyl vinyl ether, 2-chloroethyl vinyl ether, 3-chloropropyl vinyl ether, 2-chloroethyl allyl ether, 3-chloropropyl allyl ether, and the like.

Specific examples of the halogen-containing unsaturated ketones include 2-chloroethyl vinyl ketone, 3-chloropropyl vinyl ketone, 2-chloroethyl allyl ketone, and the like.

Specific examples of the halomethyl group-containing aromatic vinyl compounds include p-chloromethylstyrene, m-chloromethylstyrene, o-chloromethylstyrene, p-chloromethyl-$\alpha$-methylstyrene, and the like.

Specific examples of the halogen-containing unsaturated amides include N-chloromethyl-(meth)acrylamide, and the like.

Specific examples of the haloacetyl group-containing unsaturated monomers include 3-(hydroxychloroacetoxy)propyl allyl ether, p-vinylbenzyl chloroacetic acid esters, and the like.

Specific examples of the halogenated vinyl compounds include vinyl chloride, vinylidene chloride, allyl chlorides, and the like.

Among these, preferred are unsaturated alcohol esters of halogen-containing saturated carboxylic acids and halogen-containing unsaturated ethers, more preferred are vinyl chloroacetate and 2-chloroethyl vinyl ether, and still more preferred is vinyl chloroacetate. These monomers having a halogen atom can be used alone or in combination.

Examples of the diene monomers include conjugated diene monomers and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

Besides the monomers having an epoxy group, the monomers having a halogen atom, and the diene monomers listed above, another cross-linkable monomer other than carboxyl group-containing monomers can also be used as needed.

These monomers having an epoxy group, monomers having a halogen atom, and diene monomers listed above can be used alone or in combination.

Specific examples of the aromatic vinyl monomers include styrene, $\alpha$-methylstyrene, divinylbenzene, and the like.

Specific examples of the $\alpha,\beta$-ethylenically unsaturated nitrile monomers include acrylonitrile, methacrylonitrile, and the like.

Specific examples of the polyfunctional (meth)acrylic monomers include ethylene glycol di(meth)acrylate, propylene glycol di(meth)acrylate, and the like.

Specific examples of the olefin monomers include ethylene, propylene, 1-butene, 1-octene, and the like.

Examples of the α, β-ethylenically unsaturated dicarboxylic acid diester monomers include, but should not be limited to, diesters of $C_4$ to $C_{12}$ α, β-ethylenically unsaturated dicarboxylic acids with $C_1$ to $C_8$ alcohols. The two organic groups in the diester may be the same or different. Specific examples of the α, β-ethylenically unsaturated dicarboxylic acid diesters include maleic acid diesters such as dimethyl maleate, diethyl maleate, dipropyl maleate, di-n-butyl maleate, diisobutyl maleate, dicyclopentyl maleate, dicyclohexyl maleate, dibenzyl maleate, and diphenyl maleate; fumaric acid diesters such as dimethyl fumarate, diethyl fumarate, dipropyl fumarate, di-n-butyl fumarate, diisobutyl fumarate, dicyclopentyl fumarate, dicyclohexyl fumarate, dibenzyl fumarate, and diphenyl fumarate; citraconic acid diesters such as dimethyl citraconate, diethyl citraconate, dipropyl citraconate, di-n-butyl citraconate, dibenzyl citraconate, and diphenyl citraconate; itaconic acid diesters such as dimethyl itaconate, diethyl itaconate, di-n-butyl itaconate, diisobutyl itaconate, dicyclohexyl itaconate, dibenzyl itaconate, and diphenyl itaconate; mesaconic acid diesters such as dimethyl mesaconate, diethyl mesaconate, dipropyl mesaconate, di-n-butyl mesaconate, dibenzyl mesaconate, and diphenyl mesaconate; 2-pentenedioic acid diesters such as dimethyl 2-pentenedioate, diethyl 2-pentenedioate, dipropyl 2-pentenedioate, di-n-butyl 2-pentenedioate, dibenzyl 2-pentenedioate, and diphenyl 2-pentenedioate; dicyclohexyl acetylenedicarboxylate; and the like.

Specific examples of the vinyl ester compounds include vinyl acetate, vinyl propionate, vinyl pivalate, vinyl benzoate, vinyl cinnamate, and the like.

Specific examples of the vinyl ether compounds include ethyl vinyl ether, n-butyl vinyl ether, and the like.

Among these, preferred are styrene, acrylonitrile, methacrylonitrile, ethylene, and vinyl acetate, and more preferred are acrylonitrile, methacrylonitrile, ethylene, and vinyl acetate.

These other copolymerizable monomers can be used alone or in combination. The content of these other copolymerizable monomer units in the acrylic rubber is usually 29.5% by weight or less, preferably 20% by weight or less, more preferably 15% by weight or less, still more preferably 5% by weight or less, particularly preferably 0% by weight or less. In other words, preferably, the acrylic rubber according to the present invention substantially consists of the ethyl methacrylate units (a), the ethyl acrylate units (b), the n-butyl acrylate units (c), and the carboxyl group-containing monomer units (d), or substantially consists of these monomer units (a) to (d) and the 2-methoxyethyl acrylate units (e).

The acrylic rubber according to the present invention can be prepared by polymerizing the monomers described above. The polymerization reaction can be performed by any one of emulsion polymerization, suspension polymerization, bulk polymerization, and solution polymerization. Preferred is emulsion polymerization under ambient pressure, which is usually used as a conventionally known method of producing acrylic rubber, because the polymerization reaction is easily controlled.

Emulsion polymerization may be performed by any of a batchwise method, a semi-batchwise method, and a continuous method. The polymerization is usually performed in the temperature range of 0 to 70°C, preferably 5 to 50°C. It is not always necessary that all of the monomers described above are totally fed to the reaction system in the beginning of the reaction, and considering the copolymerization reactivity ratio, the reaction conversion rate, and the like, these monomers may be added continuously or intermittently across the entire reaction time, or may be introduced in batches or in portions in the middle of or in the latter half of the reaction. Although the proportion of the monomers to be charged in the polymerization reaction may be adjusted depending on the reactivity of each monomer, the polymerization reaction progresses substantially quantitatively in many cases. Thus, considering this, the proportions of the monomers to be charged may be determined depending on the proportions of monomer units of the target acrylic rubber. After the polymerization, solidification and drying are performed to give a solid acrylic rubber.

The acrylic rubber according to the present invention has a weight average molecular weight (Mw) of preferably 50,000 to 5,000,000, more preferably 100,000 to 4,000,000, still more preferably 150,000 to 3,500,000, although not particularly limited thereto. The weight average molecular weight of the acrylic rubber can be measured by gel permeation chromatography as a value against polystyrene standards, for example.

The acrylic rubber according to the present invention has a Mooney viscosity (ML1+4, 100°C)(polymer Mooney) of preferably 10 to 80, more preferably 20 to 70, still more preferably 25 to 60, although not particularly limited thereto.

<Acrylic rubber composition>

The acrylic rubber composition according to the present invention comprises the acrylic rubber and an antioxidant.

The antioxidant can be any antioxidant, and is preferably at least one of the compounds represented by General Formulae (1) to (4) below to ensure higher heat resistance of the resulting cross-linked rubber. Hereinafter, details of the compounds represented by General Formulae (1) to (4) will be described.

(Compound represented by General Formula (1))

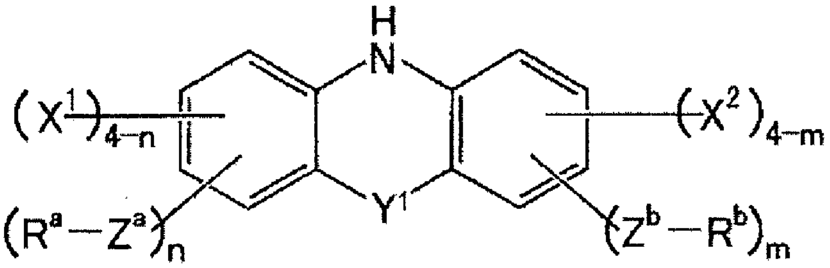

(1)

In General Formula (1), $Y^1$ represents a chemical single bond, - S(=O)-, or $-SO_2-$. Preferred are -S(=O)- and $-SO_2-$, and more preferred is - $SO_2-$.

In General Formula (1), $R^a$ and $R^b$ each independently represent a $C_1$ to $C_{30}$ organic group which may have a substituent.

Examples of the $C_1$ to $C_{30}$ organic group forming $R^a$ and $R^b$ include $C_1$ to $C_{30}$ alkyl groups such as a methyl group, an ethyl group, an n-propyl group, an isopropyl group, an n-butyl group, an isobutyl group, a sec-butyl group, a t-butyl group, an n-pentyl group, an n-hexyl group, an n-heptyl group, an n-octyl group, an n-nonyl group, and an n-decyl group; $C_3$ to $C_{30}$ cycloalkyl groups such as a cyclopropyl group, a cyclopentyl group, a cyclohexyl group, a cycloheptyl group, and a cyclooctyl group; $C_6$ to $C_{30}$ aryl groups such as a phenyl group, a biphenyl group, a naphthyl group, and an anthranil group; $C_1$ to $C_{30}$ alkoxy groups such as a methoxy group, an ethoxy group, an n-propoxy group, an isopropoxy group, an n-butoxy group, an isobutoxy group, a sec-butoxy group, a t-butoxy group, an n-pentyloxy group, and an n-hexyloxy group; and the like.

The organic group forming $R^a$ and $R^b$ described above may have a substituent at any position.

When the organic group is an alkyl group, examples of a substituent for the organic group include halogen atoms such as fluorine, chlorine, and bromine atoms; $C_1$ to $C_{10}$ alkoxy groups such as a methoxy group, an ethoxy group, and an isopropoxy group; a nitro group; a cyano group; substituted and non-substituted phenyl groups, such as a phenyl group, a 4-methylphenyl group, and a 2-chlorophenyl group; and the like.

When the organic group is a cycloalkyl group or an aryl group, examples thereof include halogen atoms such as fluorine, chlorine, and bromine atoms; $C_1$ to $C_{10}$ alkoxy groups such as a methoxy group, an ethoxy group, and an isopropoxy group; a nitro group; a cyano group; $C_1$ to $C_{10}$ alkyl groups such as a methyl group, an ethyl group, and a t-butyl group; and the like.

When the organic group is an alkoxy group, examples thereof include halogen atoms such as fluorine, chlorine, and bromine atoms; a nitro group; a cyano group; and the like.

When the organic group forming $R^a$ and $R^b$ has a substituent, the carbon atoms of the substituent are not counted as carbon atoms of the organic group. In other words, the number of carbon atoms of the organic group forming $R^a$ and $R^b$ is in the range of 1 to 30 excluding the carbon atoms contained in the substituent. For example, when the organic group forming $R^a$ and $R^b$ is a methoxyethyl group, the number of carbon atoms of the organic group is two. In other words, because the methoxy group is a substituent in this case, the number of carbon atoms of the organic group corresponds to that excluding the carbon atom of the methoxy group as the substituent.

In General Formula (1) above, it is preferred that $R^a$ and $R^b$ each independently be a linear or branched $C_1$ to $C_{20}$ alkyl group which may have a substituent, a phenyl group which may have a substituent, and a naphthyl group which may have a substituent. More preferred is a linear or branched $C_2$ to $C_8$ alkyl group which may have a substituent or a phenyl group which may have a substituent.

Preferred specific examples of the organic group forming $R^a$ and $R^b$ described above include an $\alpha$-methylbenzyl group, an $\alpha,\alpha$-dimethylbenzyl group, a t-butyl group, a phenyl group, and a 4-methylphenyl group, and the like. Among these groups, particularly preferred is an $\alpha,\alpha$-dimethylbenzyl group or a 4-methylphenyl group. $R^a$ and $R^b$ can each be independent.

In General Formula (1), $Z^a$ and $Z^b$ each independently represent a chemical single bond or $-SO_2-$. Preferred is a chemical single bond.

In General Formula (1), $X^1$ and $X^2$ each independently represent a hydrogen atom, a halogen atom, a $C_1$ to $C_{10}$ alkyl group which may have a substituent, a cyano group, a nitro group, $-OR^1$, $-O-C(=O)-R^1$, $-C(=O)-OR^1$, - $O-C(=O)-OR^1$, $-NR^2(R^3)$, $-NR^2-C(=O)-R^1$, -C $(=O)-NR^2(R^3)$, or $-O-C(=O)-NR^2(R^3)$.

Examples of the halogen atom forming $X^1$ and $X^2$ include fluorine, chlorine, bromine atoms, and the like.

Examples of $C_1$ to $C_{10}$ alkyl groups for the $C_1$ to $C_{10}$ alkyl group which may have a substituent include a methyl

group, an ethyl group, a propyl group, an isopropyl group, an n-butyl group, an isobutyl group, a t-butyl group, an n-pentyl group, an n-hexyl group, an n-heptyl group, an n-octyl group, an n-nonyl group, an n-decyl group, and the like.

Examples of the substituent for the $C_1$ to $C_{10}$ alkyl group include halogen atoms such as fluorine, chlorine, and bromine atoms; alkoxy groups such as a methoxy group, an ethoxy group, an n-propoxy group, an isopropoxy group, an n-butoxy group, and a t-butoxy group; a nitro group; a cyano group; and the like.

$R^1$, $R^2$, and $R^3$ each independently represent a hydrogen atom or a $C_1$ to $C_{20}$ organic group which may have a substituent, and it is preferred that $R^1$, $R^2$, and $R^3$ all be a hydrogen atom.

Examples of $C_1$ to $C_{20}$ organic groups for the $C_2$ to $C_{20}$ organic group which forms $R^1$, $R^2$, and $R^3$ and may have a substituent include $C_1$ to $C_{20}$ alkyl groups such as a methyl group, an ethyl group, an n-propyl group, an isopropyl group, an n-butyl group, an isobutyl group, a t-butyl group, an n-pentyl group, an n-hexyl group, an n-heptyl group, an n-octyl group, an n-nonyl group, and an n-decyl group; $C_3$ to $C_{20}$ cycloalkyl groups such as a cyclopropyl group, a cyclopentyl group, a cyclohexyl group, a cycloheptyl group, and a cyclooctyl group; $C_6$ to $C_{20}$ aryl groups such as a phenyl group, a naphthyl group, and an anthranil group; $C_1$ to $C_{20}$ alkoxy groups such as a methoxy group, an ethoxy group, an n-propoxy group, an isopropoxy group, an n-butoxy group, an isobutoxy group, a sec-butoxy group, a t-butoxy group, an n-pentyloxy group, and an n-hexyloxy group; and the like.

Examples of the substituent for the organic group forming $R^1$, $R^2$, and $R^3$ include the same substituents as those listed above as the substituents for the organic group forming $R^a$ and $R^b$.

Among these, $X^1$ and $X^2$ both are preferably a hydrogen atom from the viewpoint of availability.

In General Formula (1), "n" and "m" each independently represent an integer of 0 to 2, and one of "n" and "m" is not 0. It is preferred that "n" and "m" each independently be 0 or 1 (where one of "n" and "m" is not 0), and it is more preferred that "n" and "m" be 1.

When "n" and/or "m" is 2, two $R^a$s and two $R^b$s each may be the same or different.

The compound represented by General Formula (1) is preferably any of compounds represented by General Formulae (5) to (12):

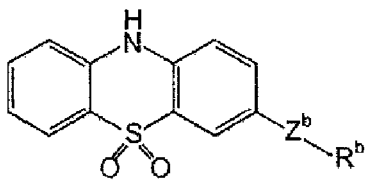

(5)

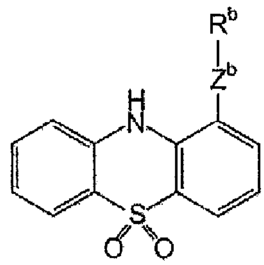

(6)

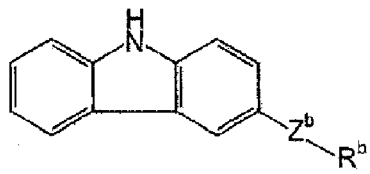

(7)

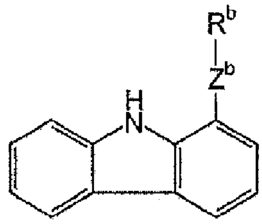

(8)

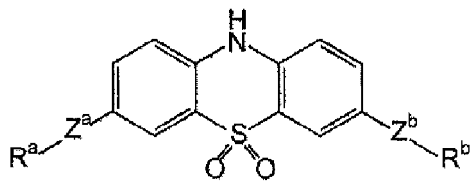

(9)

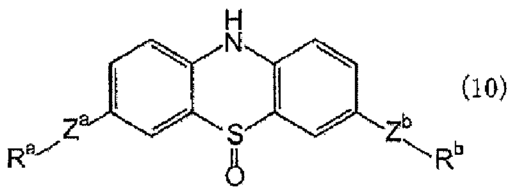

(10)

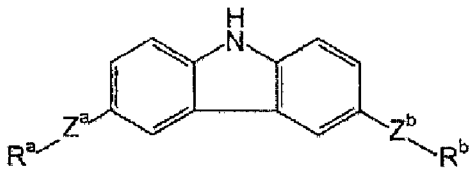

(11)

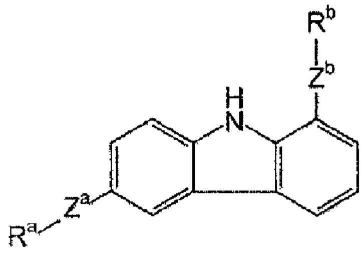

(12)

(where $R^a$, $R^b$, $Z^a$, and $Z^b$ are the same as those described in General Formula (1)).

Among these compounds represented by General Formulae (5) to (12), more preferred are compounds represented by General Formulae (5), (9), and (10), still more preferred are compounds represented by General Formulae (9) and (10), and particularly preferred are compounds represented by General Formula (9).

In General Formulae (5) to (12), more preferred are compounds where - $Z^a$-$R^a$ and -$Z^b$-$R^b$ each independently are an $\alpha$-methylbenzyl group, an $\alpha,\alpha$-dimethylbenzyl group, a t-butyl group, a phenylsulfonyl group, or a 4-methylphenylsulfonyl group. Particularly preferred are compounds where - $Z^a$-$R^a$ and -$Z^b$-$R^b$ each independently are an $\alpha,\alpha$-dimethylbenzyl group.

The compound represented by General Formula (1) above can be synthesized by a process described in International Publication No. WO 2011/093443. For example, among the compounds represented by General Formula (1), a compound where $Y^1$ is -S(=O)- and a compound where $Y^1$ is - $SO_2$- can be prepared by preparing a compound where $Y^1$ in General Formula (1) is S by a known process of preparing a phenothiazine compound, and then oxidizing the compound. Among the compounds represented by General Formula (1), a compound where $Y^1$ is a single bond can be prepared by a known process of preparing a carbazole compound.

(Compound represented by General Formula (2))

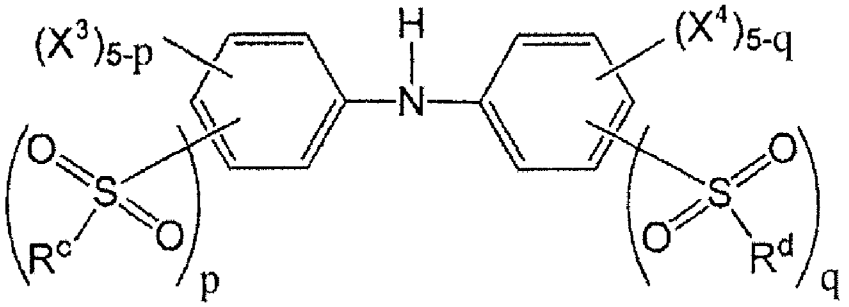

(2)

In General Formula (2), $R^c$ and $R^d$ each independently represent a $C_1$ to $C_{30}$ organic group which may have a substituent, and preferred is a $C_1$ to $C_{30}$ aromatic or cyclic aliphatic group which may have a substituent.

Examples of the $C_1$ to $C_{30}$ aromatic group include, but should not be limited to, aromatic hydrocarbon groups such as a phenyl group, a biphenyl group, a naphthyl group, a phenanthryl group, and an anthranil group; aromatic heterocyclic groups such as a furyl group, a pyrrolyl group, a thienyl group, a pyridyl group, and a thiazolyl group; and the like.

Examples of the $C_1$ to $C_{30}$ cyclic aliphatic group include, but should not be limited to, a cyclopropyl group, a cyclobutyl group, a cyclopentyl group, a cyclohexyl group, and the like. Among these, it is preferred that $R^c$ and $R^d$ each independently be a phenyl group or a 4-methylphenyl group.

The organic group forming $R^c$ and $R^d$ described above may have a substituent at any position. Examples of such a substituent include halogen atoms such as fluorine, chlorine, and bromine atoms; $C_1$ to $C_{10}$ alkoxy groups such as a methoxy group, an ethoxy group, and an isopropoxy group; a nitro group; a cyano group; $C_1$ to $C_{10}$ alkyl groups such as a methyl group, an ethyl group, and a t-butyl group; and the like.

When the organic group forming $R^c$ and $R^d$ in General Formula (2) has a substituent, the carbon atoms of the substituent are not counted as carbon atoms of the organic group.

In General Formula (2), $X^3$ and $X^4$ each independently represent a hydrogen atom, a halogen atom, a $C_1$ to $C_{10}$ alkyl group which may have a substituent, such as a methyl group, an ethyl group, an n-propyl group, an isopropyl group, an n-butyl group, an isobutyl group, a sec-butyl group, a t-butyl group, an n-pentyl group, an n-hexyl group, an

n-heptyl group, an n-octyl group, an n-nonyl group, and an n-decyl group, a cyano group, a nitro group, $-OR^4$, $-O-C(=O)-R^4$, $-C(=O)-OR^4$, $-O-C(=O)-OR^4$, $NR^5(R^6)-$, $-NR^5-C(=O)-R^4$, $-C(=O)-NR^5(R^6)$, or $-O-C(=O)-NR^5(R^6)$. Here, $R^4$, $R^5$, and $R^6$ each independently represent a hydrogen atom or a $C_1$ to $C_{20}$ organic group which may have a substituent, and all of a plurality of $X^3$s and a plurality of $X^4$s can each independently have different substituents. It is preferred that $X^3$ and $X^4$ all be a hydrogen atom.

For $X^3$ and $X^4$, examples of the substituents for the $C_1$ to $C_{10}$ alkyl groups which may have a substituent include the same substituents as those listed as the substituents for the $C_1$ to $C_{30}$ alkyl groups which may have a substituent in the description of $R^a$ and $R^b$.

In the present invention, as the compound represented by General Formula (2), a compound is preferably selected where $R^c$ and $R^d$ each independently represent a $C_1$ to $C_{30}$ aromatic group or cyclic aliphatic group which may have a substituent, $X^3$ and $X^4$ represent a hydrogen atom, and "p" and "q" represent 1, and a compound represented by the following General Formula (13) is more preferable:

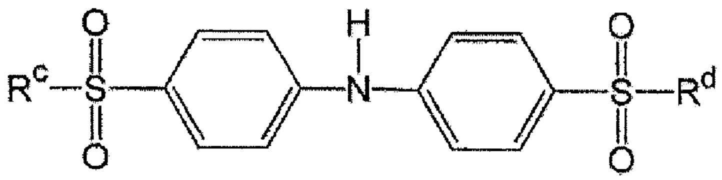

(13)

(where $R^c$ and $R^d$ are the same as those in General Formula (2)) .

The compound represented by General Formula (2) can be prepared by a known production process. For example, the compound can be synthesized by the reaction process according to International Publication No. WO 2011/058918.

(Compound represented by General Formula (3))

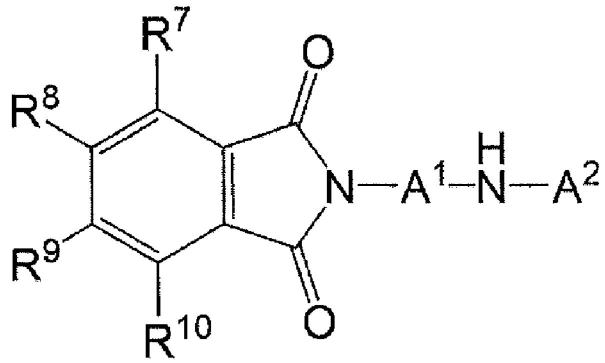

(3)

In General Formula (3), $A^1$ and $A^2$ each independently represent a $C_1$ to $C_{30}$ aromatic group which may have a substituent. $R^7$, $R^9$, and $R^{10}$ each independently represent a hydrogen atom, a halogen atom, a $C_1$ to $C_{10}$ alkyl group which may have a substituent, a cyano group, a nitro group, $-OR^{1a}$, $-O-C(=O)-R^{1a}$, $-C(=O)-OR^{1a}$, $-O-C(=O)-OR^{1a}$, $-NR^{1b}=C(=O)-R^{1a}$, $-C(=O)-NR^{1a}R^{1c}$, or $-O-C(=O)-NR^{1a}R^{1c}$. $R^{1a}$ and $R^{1c}$ each independently represent a hydrogen atom or a $C_1$ to $C_{30}$ organic group which may have a substituent. Each $R^{1b}$ independently represents a hydrogen atom or a $C_1$ to $C_6$ alkyl group. The $C_1$ to $C_{30}$ organic group forming $R^{1a}$ and $R^{1c}$ may include at least one linking group selected from the group consisting of -O-, -S-, -O-C(=O)-, -C(=O)-O-, -O-C(=O)-O-, $-NR^{1d}-C(=O)-$, $-C(=O)-NR^{1d}-$, $-NR^{1d}-$, and -C(=O)-, except for the case where a linking group consisting of two or more adjacent -O- or -S- groups is included. Each $R^{1d}$ independently represents a hydrogen atom or a $C_1$ to $C_6$ alkyl group.

In General Formula (3), $R^8$ represents a hydrogen atom, a halogen atom, a $C_1$ to $C_{10}$ alkyl group which may have a substituent, a cyano group, a nitro group, $-O-C(=O)-R^{1e}$, $-C(=O)-OR^{1e}$, $-NR^{1b}-C(=O)-R^{1e}$, $-C(=O)-NR^{1e}R^{1f}$, or $-O-C(=O)-NR^{1e}R^{1f}$. $R^{1e}$ and $R^{1f}$ each independently represent a $C_1$ to $C_{30}$ organic group which may have a substituent. The $C_1$ to $C_{30}$ organic group forming $R^{1e}$ and $R^{1f}$ may include at least one linking group selected from the group consisting of -O-, -S-, -O-C(=O)-, -C(=O)-O-, -O-C(=O)-O-, $-NR^{1d}-C(=O)-$, $-C(=O)-NR^{1c}-$, $-NR^{1d}-$, and -C(=O)-, except for the case where a linking group consisting of two or more -O- or -S- groups is included. $R^{1b}$ and $R^{1d}$ each independently represent a hydrogen atom or a $C_1$ to $C_6$ alkyl group.

In one preferred aspect, as the compound represented by General Formula (3), a compound can be selected where $A^1$ is a phenylene group which may have a $C_1$ to $C_{30}$ substituent, $A^2$ is a phenyl group which may have a $C_1$ to $C_{30}$ substituent, $R^7$, $R^9$, and $R^{10}$ are a hydrogen atom, $R^8$ is $-O-C(=O)-R^{1e}$, $-C(=O)-OR^{1e}$, $-NR^{1b}-C(=O)-R^{1e}$, $-C(=O)-NR^{1e}R^{1f}$, or $-O-C(=O)-NR^{1e}R^{1f}$, $R^{1b}$ is a hydrogen atom or a $C_1$ to $C_6$ alkyl group, and $R^{1e}$ and $R^{1f}$ each independently represent a $C_1$ to $C_{30}$ organic group which may have a substituent.

In a more preferred aspect among these preferred aspects, as the compound represented by General Formula (3), a diarylamine compound can be selected, where in General Formula (3), $R^8$ is $-C(=O)-OR^{1e}$, $R^{1e}$ is a phenyl group which may have a $C_1$ to $C_{18}$ substituent or a naphthyl group which may have a $C_1$ to $C_{18}$ substituent.

In a still more preferred aspect among these preferred aspects, as the compound represented by General Formula (3), a diarylamine compound can be selected, where in General Formula (3), $R^8$ is $-C\ (=O)-OR^{1e}$; $R^{1e}$ is a $C_1$ to $C_{10}$ alkyl group which may have a substituent or a $C_4$ to $C_{30}$ aromatic group which may have a substituent; the substituent forming $R^{1e}$ each independently is a halogen atom, a $C_1$ to $C_{10}$ alkyl group, a $C_1$ to $C_{20}$ aralkyl group, a $C_6$ to $C_{30}$ aromatic group, a cyano group, a nitro group, a sulfo group, -OR, -O-C(=O)-R, -C(=O)-OR, -O-C(=O)-OR, -NR"-C(=O)-R, - C (=O)-NRR', -O-C(=O)-NRR', -SR, -S(=O)-R, or $-S\ (=O)_2-R$, and R, R', and R" each independently represent a hydrogen atom, a $C_1$ to $C_8$ alkyl group, or a phenyl group; $A^1$ and $A^2$ each independently represent a $C_6$ to $C_{30}$ aromatic group which may have a substituent; and the substituent forming $A^1$ and $A^2$ is a $C_1$ to $C_{10}$ alkyl group, a halogen-substituted $C_1$ to $C_{10}$ alkyl group, a halogen atom, a cyano group, or a nitro group. In other words, a diarylamine compound containing a phtalimide group having an ester group at the 4-position can be selected, which is represented by General Formula (14) :

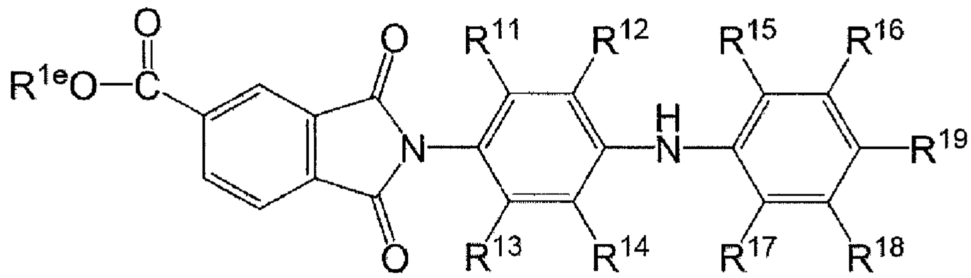
(14)

In General Formula (14), $R^{11}$ to $R^{19}$ each independently represent a hydrogen atom, a $C_1$ to $C_{10}$ alkyl group, a halogen-substituted $C_1$ to $C_{10}$ alkyl group, a halogen atom, a cyano group, or a nitro group.

Furthermore, the diarylamine compound represented by General Formula (3) will be specifically described.

In General Formula (3), $R^8$ is preferably an ester group represented by $-C(=O)-OR^{1e}$ because the target compound is easily prepared. Here, $R^{1e}$ is a $C_1$ to $C_{30}$ organic group which may have a substituent, and the $C_1$ to $C_{30}$ organic group forming $R^{1e}$ can be selected from many aliphatic groups, such as alkyl groups, cycloalkyl groups, aryl group, arylalkyl groups, alkylaryl groups, arylalkylaryl groups, and alkoxy groups, and aromatic groups. From the viewpoint of heat resistance, aromatic groups, particularly, a phenyl group or a naphthyl group can be preferably selected.

Furthermore, if in General Formula (3), $R^8$ is $-C\ (=O)-OR^{1e}$ and $R^{1e}$ is a $C_1$ to $C_{20}$ aromatic group which may have a substituent, use of such a compound as an antioxidant is particularly preferred because a higher heat resistance improving effect is ensured. Most preferably, $R^8$ is an ester structure represented by $-C\ (=O)-OR^{1e}$ where $R^{1e}$ is a phenyl group which may have a $C_1$ to $C_{18}$ substituent or a naphthyl group which may have a $C_1$ to $C_{18}$ substituent, because a much higher heat resistance improving effect is ensured.

The compound represented by General Formula (3) can be prepared by a known production process. For example, the compound can be synthesized by the reaction process according to Japanese Patent No. 5732673.

(Compound represented by General Formula (4))

$$A^5—A^3—\overset{H}{N}—A^4—A^6 \quad (4)$$

In General Formula (4), $A^3$ and $A^4$ each independently represent a $C_6$ to $C_{18}$ arylene group which may have a substituent, and $A^5$ and $A^6$ each independently represent an organic group having a cyclic imide structure which may have a substituent.

In General Formula (4), $A^3$ and $A^4$ each independently represent a $C_6$ to $C_{18}$ arylene group which may have a substituent, preferably a $C_6$ to $C_{10}$ arylene group which may have a substituent, more preferably a phenylene group which may have a substituent, still more preferably a 1,4-phenylene group. Particularly preferably, $A^3$ and $A^4$ both are a 1,4-phenylene group because a better antioxidant effect is ensured. Examples of the substituents include halogen atoms such as fluorine, chlorine, and bromine atoms; $C_1$ to $C_{10}$ alkoxy groups such as a methoxy group, an ethoxy group, and an isopropoxy group; a nitro group; a cyano group; $C_1$ to $C_{10}$ alkyl groups such as a methyl group, an ethyl group, and a t-butyl group; and the like.

In General Formula (4), $A^5$ and $A^6$ each independently represent an organic group having a cyclic imide structure which may have a substituent, and are preferably an organic group represented by General Formula (15) or (16):

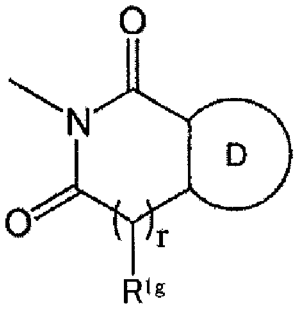

(15)

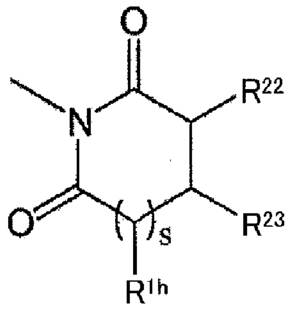

(16)

In General Formula (15), D represents a $C_6$ to $C_{18}$ ring which may have a substituent, preferably a $C_6$ to $C_{10}$ ring which may have a substituent; and D may be monocyclic or polycyclic. Examples of the substituent in this case include $C_1$ to $C_{30}$ alkyl groups, $C_1$ to $C_{30}$ alkenyl groups, $-O-R^{20}$, $-O-C(=O)-R^{20}$, $-C(=O)-O-R^{20}$, $-C(=O)-NR^{20}(R^{21})$, $-NR^{20}-C(=O)-R^{21}$, - CN, $-SR^{20}$, $-S-(=O)-R^{20}$, $-S(=O)_2-R^{20}$, and the like. $R^{20}$ and $R^{21}$ each independently represent a $C_1$ to $C_{30}$ alkyl group, a $C_1$ to $C_{30}$ alkenyl group, or a $C_6$ to $C_{12}$ aromatic group. "r" represents 0 or 1, preferably 0. Examples of $R^{1g}$ include a hydrogen atom, a $C_1$ to $C_{30}$ alkyl group, a $C_1$ to $C_{30}$ alkenyl group, $-O-R^{20}$, $-O-C(=O)-R^{20}$, $-C(=O)-O-R^{20}$, $-C(=O)-NR^{20}(R^{21})$, $-NR^{20}-C(=O)-R^{21}$, -CN, $-SR^{20}$, $-S-(=O)-R^{20}$, and $-S(=O)_2-R^{20}$. $R^{20}$ and $R^{21}$ each independently represent a $C_1$ to $C_{30}$ alkyl group, a $C_1$ to $C_{30}$ alkenyl group, or a $C_6$ to $C_{12}$ aromatic group.

In General Formula (16), $R^{22}$, $R^{23}$, and $R^{1h}$ each independently represent a hydrogen atom, a $C_1$ to $C_{30}$ alkyl group, a $C_1$ to $C_{30}$ alkenyl group, $-O-R^{20}$, $-O-C(=O)-R^{20}$, $-C(=O)-O-R^{20}$, $-C(=O)-NR^{20}(R^{21})$, $-NR^{20}-C(=O)-R^{21}$, - CN, $-SR^{20}$, $-S-(=O)-R^{20}$, or $-S(=O)_2-R^{20}$. $R^{20}$ and $R^{21}$ each independently represent a $C_1$ to $C_{30}$ alkyl group, a $C_1$ to $C_{30}$ alkenyl group, or a $C_6$ to $C_{12}$ aromatic group. The organic group forming $R^{22}$, $R^{23}$, and $R^{1h}$ described above may have a substituent. In the case where the organic group has a substituent, examples of the substituent include halogen atoms such as fluorine, chlorine, and bromine atoms; $C_1$ to $C_{10}$ alkoxy groups such as a methoxy group, an ethoxy group, and an isopropoxy group; a nitro group; a cyano group; substituted and non-substituted phenyl groups, such as a phenyl group, a 4-methylphenyl group, and a 2-chlorophenyl group; and the like. "s" represents 0 or 1, and is preferably 0.

Among these organic groups forming $A^5$ and $A^6$, which are represented by General Formula (15) or (16), preferred is any of organic groups represented by General Formulae (17) to (22) to attain a better antioxidant effect.

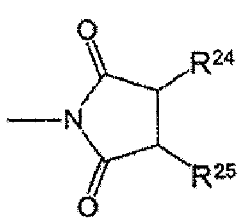

(17)

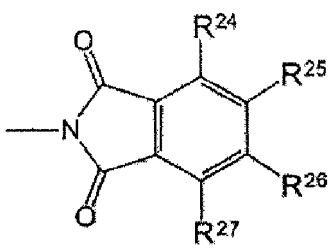

(18)

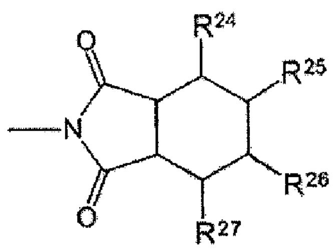

(19)

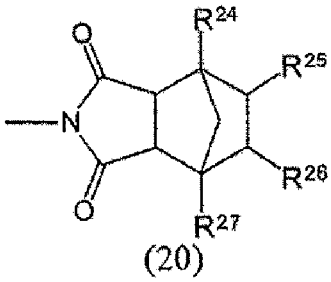

(20)

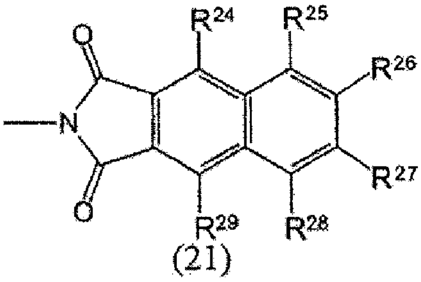

(21)

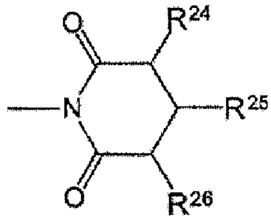

(22)

In General Formulae (17) to (22), $R^{24}$ to $R^{29}$ each independently represent a hydrogen atom, a $C_1$ to $C_{30}$ alkyl group, a $C_1$ to $C_{30}$ alkenyl group, $-O-R^{30}$, $-O-C(=O)-R^{30}$, $-C(=O)-O-R^{30}$, $-C(=O)-NR^{30}(R^{31})$, $-NR^{30}-C(=O)-R^{31}$, - CN, $-SR^{30}$, $-S-(=O)-R^{30}$, or $-S(=O)_2-R^{30}$; and $R^{30}$ and $R^{31}$ each independently represent a $C_1$ to $C_{30}$ alkyl group, a $C_1$ to $C_{30}$ alkenyl group, or a $C_6$ to $C_{12}$ aromatic group. It is preferred that $R^{24}$ to $R^{29}$ each independently be a hydrogen atom or a $C_1$ to $C_{30}$ alkyl group. More preferred is a hydrogen atom or a $C_1$ to $C_{20}$ alkyl group. Particularly preferred is a hydrogen atom or a $C_1$ to $C_{10}$ alkyl group. When two or more $R^{24}$s to $R^{29}$s are present, these may be the same or different.

Among these organic groups represented by General Formulae (17) to (22) above, to further enhance the antioxidant effect, more preferred is an organic group represented by General Formula (17), (18), (20), or (21), still more preferred is an organic group represented by General Formula (17), (18), or (21), and particularly preferred is an organic group represented by General Formula (18).

The compound represented by General Formula (4) is preferably any of compounds represented by General Formulae (23) to (26):

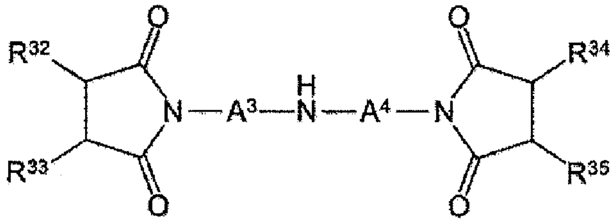

(23)

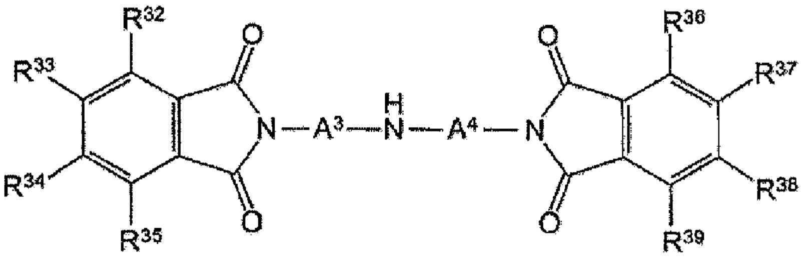

(24)

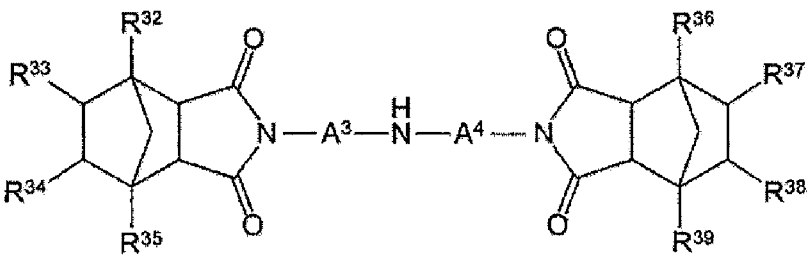

(25)

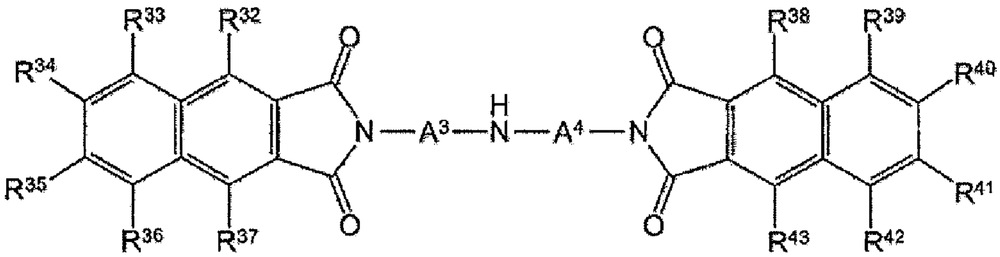

(26)

In General Formulae (23) to (26), $R^{32}$ to $R^{43}$ each independently represent a hydrogen atom, a $C_1$ to $C_{30}$ alkyl group, a $C_1$ to $C_{30}$ alkenyl group, $-OR^{44}$, $-O-C(=O)-R^{44}$, $-C(=O)-OR^{44}$, $-C(=O)-NR^{44}(R^{45})$, $-NR^{44}-C(=O)-R^{45}$, -CN, $-SR^{44}$, $-S-(=O)-R^{44}$, or $-S(=O)_2-R^{44}$; and $R^{44}$ and $R^{45}$ each independently represent a $C_1$ to $C_{30}$ alkyl group, a $C_1$ to $C_{30}$ alkenyl group, or a $C_6$ to $C_{12}$ aromatic group. It is preferred that $R^{32}$ to $R^{43}$ each independently be a hydrogen atom or a $C_1$ to $C_{30}$ alkyl group. More preferred is a hydrogen atom or a $C_1$ to $C_{20}$ alkyl group. Particularly preferred is a hydrogen atom or a $C_1$ to $C_{10}$ alkyl group. $A^3$ and $A^4$ are the same as those in General Formula (4) above.

Among these compounds represented by General Formulae (23) to (26), particularly preferred are the compounds represented by General Formula (24), which can further enhance the antioxidant effect.

The compound represented by General Formula (4) can be prepared by a known production process. For example, the compound can be synthesized by the reaction process according to International Publication No. WO 2018/159459.

In addition to the compounds represented by General Formulae (1) to (4), the acrylic rubber composition according to the present invention may further contain a different antioxidant other than the compounds represented by General Formulae (1) to (4). Although the different antioxidant is not particularly limited, the following phenol antioxidants can be used: monophenol antioxidants such as 2,6-di-t-butyl-p-cresol, 2,6-di-t-butyl-4-ethylphenol, 2,6-di-t-butyl-4-methylphenol, 2,6-di-t-butyl-4-sec-butylphenol, 2-(1-methylcyclohexyl)-4,6-dimethylphenol, 2,6-di-t-butyl-α-dimethylamino-p-cresol, 2,4-bis[(octylthio)methyl]-o-cresol, styrenated phenol, and alkylated phenols; bis-, tris-, or polyphenol antioxidants such as 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(6-α-methylbenzyl-p-cresol), methylene-bridged polyvalent alkylphenols, 4,4'-butylidenebis(6-t-butyl-m-cresol), 4,4'-butylidenebis(3-methyl-6-t-butylphenol), 2,2'-ethylidenebis(4,6-di-t-butylphenol), 1,1-bis-(4-hydroxyphenyl)cyclohexane, 2,2'-dihydroxy-3,3'-(α-methylcyclohexyl)-5,5'-dimethyldiphenylmethane, alkylated bisphenols, butylated reaction products of p-cresol and dicyclopentadiene, 2,5-di-t-butylhydroquinone, and 2,5-di-t-amylhydroquinone; and thiobisphenol antioxidants such as 4,4'-thiobis(6-t-butyl-m-cresol), 4,4'-thiobis(6-t-butyl-o-cresol), 4,4'-thiobis(3-methyl-6-t-butylphenol), and bis(3,5-di-t-butyl-4-hydroxybenzyl)sulfide. The following antioxidants can also be used: aromatic secondary amine compounds such as phenyl-α-naphthylamine, octylated diphenylamine, 4,4'-bis(α,α-dimethylbenzyl)diphenylamine, p-(p-toluenesulfonylamide)diphenylamine, p-isopropoxydiphenylamine, bis(phenylisopropylidene)-4,4-diphenylamine, N,N'-diphenylethylenediamine, N,N'-diphenylpropylenediamine, N,N'-diphenyl-p-phenylenediamine, N-isopropyl-N'-phenyl-p-phenylenediamine, N,N'-di-2-naphthyl-p-phenyldiamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N-bis(1,4-dimethylpentyl)-p-phenylenediamine, 4-(α-phenylethyl)diphenylamine, 4,4'-bis(α-phenylethyl)diphenylamine, and 4,4'-bis(4-methylphenyl)sulfonyl)diphenylamine; nickel dialkyl dithiocarbamates such as nickel dimethyldithiocarbamate, nickel diethyldithiocarbamate, and nickel dibutyldithiocarbamate; and the like.

The content of the antioxidant in the acrylic rubber composition according to the present invention is preferably 0.1 to 5.0 parts by weight, more preferably 0.3 to 3.5 parts by weight, still more preferably 0.4 to 3 parts by weight, particularly preferably 0.9 to 2.8 parts by weight relative to 100 parts by weight of the acrylic rubber. A content of the antioxidant within this range can ensure higher heat resistance of the resulting cross-linked rubber.

The acrylic rubber composition according to the present invention may further comprise a cross-linking agent. The acrylic rubber composition according to the present invention can be made cross-linkable (cross-linkable acrylic rubber composition) by the cross-linking agent contained therein, and can be formed into a cross-linked rubber through a cross-linking reaction by heating, for example.

The cross-linking agent is not particularly limited, and the following cross-linking agents traditionally known can be used, for example: polyvalent amine compounds such as diamine compounds and carbonates thereof; sulfur; sulfur donors; triazinethiol compounds; ammonium salts of organic carboxylic acids; metal salts of dithiocarbamic acids; polyvalent carboxylic acids; quaternary onium salts; imidazole compounds; isocyanuric acid compounds; organic peroxides; and the like. For example, the cross-linking agent can be appropriately selected depending on the presence/absence of cross-linkable monomer units of the acrylic rubber and the type of the cross-linkable monomer units. These cross-linking agents can be used alone or in combination.

Although the polyvalent amine compounds and carbonates thereof are not particularly limited, preferred are $C_4$ to $C_{30}$ polyvalent amine compounds and carbonates thereof. Examples of such polyvalent amine compounds and carbonates thereof include aliphatic polyvalent amine compounds and carbonates thereof, aromatic polyvalent amine compounds, and the like. On the other hand, those having a non-conjugated nitrogen-carbon double bond, such as guanidine compounds, are excluded.

Examples of the aliphatic polyvalent amine compounds and carbonates thereof include, but should not be limited to, hexamethylenediamine, hexamethylenediamine carbamate, N,N'-dicinnamylidene-1,6-hexanediamine, and the like. Among these, hexamethylenediamine carbamate is preferred.

Examples of the aromatic polyvalent amine compounds include, but should not be limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl] propane, 4,4'-diaminobenzanilide, 4,4'-bis(4-aminophenoxy)biphenyl, m-xylylenediamine, p-xylylenediamine, 1,3,5-benzenetriamine, and the like. Among these, preferred is 2,2'-bis[4-(4-aminophenoxy)phenyl]propane.

Examples of the sulfur donors include dipentamethylene thiuram hexasulfide, triethylthiuram disulfide, and the like.

Examples of the triazinethiol compounds include 1,3,5-triazine-2,4,6-trithiol, 6-anilino-1,3,5-triazine-2,4-dithiol, 6-dibutylamino-1,3,5-triazine-2,4-dithiol, 6-diallylamino-1,3,5-triazine-2,4-dithiol, and 6-octylamino-1,3,5-triazine-2,4-dithiol, and the like. Among these, preferred is 1,3,5-triazine-2,4,6-trithiol.

Examples of the ammonium salts of carboxylic acids include ammonium benzoate, ammonium adipate, and the like.

Examples of the metal salts of dithiocarbamic acids include zinc dimethyldithiocarbamate, and the like.

Examples of the polyvalent carboxylic acids include tetradecanedioic acid, and the like.

Examples of the quaternary onium salts include cetyltrimethylammonium bromide, and the like.

Examples of the imidazole compounds include 2-methylimidazole, and the like.

Examples of the isocyanuric acid compounds include ammonium isocyanurate, and the like.

The amount of the cross-linking agent to be compounded in the acrylic rubber composition according to the present invention is preferably 0.05 to 20 parts by weight, more preferably 0.1 to 15 parts by weight, still more preferably 0.3 to 12 parts by weight relative to 100 parts by weight of the acrylic rubber. A content of the cross-linking agent within this range can ensure sufficient cross-linking, resulting in a cross-linked rubber having high mechanical properties.

Besides the components described above, the acrylic rubber composition according to the present invention may contain compounding agents usually used in the rubber processing field. Examples of such compounding agents include reinforcing fillers such as carbon black and silica; non-reinforcing fillers such as calcium carbonate and clay; cross-linking accelerators; photostabilizers; plasticizers; processing aids; lubricants; tackifiers; lubricating agents; flame retardants; antifungal agents; antistatic agents; colorants; silane coupling agents; cross-linking retarders; and the like. The amounts of these compounding agents are not particularly limited in the range not inhibiting the object and effects of the present invention, and these compounding agents can be compounded in appropriate amounts according to the purpose of their use.

Although not particularly limited, the Mooney viscosity (ML1+4, 100°C) (compound Mooney) of the acrylic rubber composition according to the present invention is preferably 20 to 100, more preferably 30 to 90, still more preferably 35 to 80. The acrylic rubber composition having a Mooney viscosity within this range can enhance the processability of the acrylic rubber composition, and can further enhance the tensile strength of the resulting acrylic cross-linked rubber.

<Method of preparing acrylic rubber composition>

The method of preparing the acrylic rubber composition according to the present invention is not particularly limited, and suitable is a method of mixing the acrylic rubber and the antioxidant with a variety of compounding agents optionally added.

Examples of the mixing method include, but should not be limited to, kneading methods using a kneading machine such as a roll, an intermix, a kneader, a Banbury mixer, or a screw mixer. Mixing of these materials may be performed in a solvent.

When the cross-linking agent is compounded, the components other than the cross-linking agent, a thermally unstable cross-linking aid, and the like are kneaded with a mixer such as a Banbury mixer, a Brabender mixer, an intermixer, or a kneader. The kneaded product is transferred to a roll or the like, and the cross-linking agent, the thermally unstable cross-linking aid, and the like are added to perform secondary kneading. Thus, the acrylic rubber composition according to the present invention can be prepared.

As described above, the acrylic rubber composition according to the present invention can be given. The acrylic rubber composition according to the present invention contains the acrylic rubber and the antioxidant. In particular, use of at least one of the compounds represented by General Formulae (1) to (4) as the antioxidant is further effective in

improving the heat resistance of the resulting cross-linked rubber.

When the cross-linking agent is compounded with the acrylic rubber composition according to the present invention, a cross-linked rubber can be given by cross-linking the resulting acrylic rubber composition.

The cross-linked rubber is produced by forming the acrylic rubber composition containing the cross-linking agent, and cross-linking the formed acrylic rubber composition. Examples of methods of forming and cross-linking the acrylic rubber composition include, but should not be limited to, a method of extruding the cross-linkable rubber composition into a molded body with a single- or multi-screw extruder, and then cross-linking the molded product by heating; a method of molding the acrylic rubber composition with a metal mold using an injection molding machine, an extrusion blow molding machine, a transfer molding machine, a press molding machine, or the like, and simultaneously cross-linking the acrylic rubber composition by heat during the molding; and the like. Among these methods, preferred are methods using an extruder or an injection molding machine, and particularly preferred are those using an extruder. Forming and cross-linking may be simultaneously performed, or cross-linking may be performed after forming, and the timings thereof may be selected depending on the forming method, the vulcanization method, the size of the molded body, and the like.

The forming temperature during forming and cross-linking of the acrylic rubber composition is preferably 15 to 220°C, more preferably 20 to 200°C. The cross-linking temperature is preferably 100°C or more, more preferably 120°C to 250°C. The cross-linking time may be arbitrarily selected in the range of 1 minute to 5 hours. As the heating method, a method usually used in cross-linking of the rubber, such as electric heating, steam heating, oven heating, ultra high frequency (UHF) heating, or hot air heating, may be appropriately selected.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking. When secondary cross-linking is performed, the heating temperature is preferably 100 to 220°C, more preferably 130 to 210°C, and the heating time is preferably 30 minutes to 10 hours, more preferably 1 to 5 hours.

Because the cross-linked rubber thus obtained is produced using the acrylic rubber composition comprising the acrylic rubber according to the present invention described above, the cross-linked rubber has high heat resistance, high oil resistance, high cold resistance, and high resistance against degraded engine oil in a good balance. For this reason, utilizing the properties, the cross-linked rubber thus obtained is suitably used as a variety of seals such as O-rings, packings, diaphragms, oil seals, shaft seals, bearing seals, mechanical seals, wellhead seals, seals for electrical and electronic devices, and seals for pneumatic apparatuses and devices; a variety of gaskets, such as a cylinder head gasket attached to a connection between a cylinder block and a cylinder head, a rocker cover gasket attached to a connection between a rocker cover and a cylinder head, an oil pan gasket attached to a connection between an oil pan and a cylinder block or a transmission case, a gasket for fuel cell separators included between a pair of housings which sandwich a unit cell including a positive electrode, an electrolyte plate, and a negative electrode, and a gasket for top covers for hard disk drives; a variety of belts; a variety of hoses such as fuel hoses, turbo air hoses, oil hoses, radiator hoses, heater hoses, water hoses, vacuum brake hoses, control hoses, air conditioner hoses, brake hoses, power steering hose, air hoses, marine hoses, risers, flow lines, transmission oil cooler hoses, engine oil cooler hoses, turbo intercooler hoses, and diesel turbocharger hoses; a variety of boots such as CVJ boots, propeller shaft boots, constant-velocity joint boots, and rack and pinion boots; rubber parts for damping materials such as cushion materials, dynamic dampers, rubber couplings, air springs, and vibration insulators. In particular, the cross-linked rubber can also be suitably used as a sealing material or a hose material.

EXAMPLES

Hereinafter, the present invention will be specifically described based on Examples, but these Examples should not be construed as limitations to the present invention. In the description below, "%" and "parts" indicating amounts are weight-based, unless otherwise specified. A variety of physical properties were measured as follows.

<Mooney viscosity (ML1+4100°C)>

The Mooney viscosity (compound Mooney) at a measurement temperature of 100°C of the acrylic rubber composition was measured according to JIS K6300.

<Normal state physical properties (tensile strength, elongation, and hardness)>

Acrylic rubber compositions prepared in Examples and Comparative Examples each were placed into a metal mold measuring 15 cm in length, 15 cm in width, and 0.2 cm in depth, and were pressed at 170°C for 20 minutes under a pressing pressure of 10 MPa to prepare sheet-shaped cross-linked rubbers. The prepared sheet-shaped cross-linked

rubbers were placed into a gear oven, and were subjected to a heat treatment at 170°C for 4 hours. Subsequently, the sheet-shaped cross-linked rubbers were punched out with a #3 dumbbell cutter to prepare test pieces. These test pieces were measured for tensile strength (MPa) and elongation (%) according to JIS K6251. These test pieces were also measured for hardness with a Durometer hardness tester (type A) according to JIS K6253.

<Heat aging resistance test>

Test pieces prepared in the same manner as in those used in the evaluations of the normal state physical properties above were left under a 200°C environment in a gear oven for 336 hours, and then were measured for the elongation (the retained elongation after heating). From the results of measurement, the elongation change ΔE (%) was calculated using the following expression. The elongation was measured according to JIS K6251. A smaller absolute value of the elongation change ΔE (%) indicates higher heat aging resistance.

$$\text{Elongation change } \Delta E\ (\%) = 100 \times \{(\text{retained elongation (\%) after heating} - \text{elongation (\%) before heating})/\text{elongation (\%) before heating}\}$$

<Cold resistance test>

The cold resistance test performed was a low-temperature retraction test (TR test) according to JIS K6261. Specifically, test pieces prepared in the same manner as in those used in the evaluations of the normal state physical properties above were punched out to prepare test pieces for the cold resistance test, each of which was composed of a holder of a 6.5 mm square at both ends and a parallel portion of 100.0 ± 0.2 mm in length, 2.0 ± 0.2 mm in width, and 2.0 ± 0.2 mm in thickness extending between the holders. The resulting test pieces for the cold resistance test were frozen, and the retraction of each test piece elongated by continuously raising the temperature was measured to determine the temperature (hereinafter, referred to as TR10) at which the retraction rate was 10%. A lower value of TR10 indicates higher cold resistance.

<Oil resistance test>

An oil resistance test was performed according to JIS K6258. Specifically, test pieces prepared in the same manner as in those used in the evaluations of the normal state physical properties above were punched out to prepare test pieces for the oil resistance test measuring 30 mm in length, 20 mm in width, and 2.0 ± 0.2 mm in thickness. Each of these test pieces was placed into a glass tube having an inner volume of 250 cc, and 200 cc of a test liquid was poured thereinto. The glass tube was set such that the test piece was completely immersed in the liquid. The glass tube was placed into a heating vessel, and was heated at 150°C for 72 hours. The test liquid used was an engine oil (trade name "Mobil 5W-30", available from Exxon Mobil Corporation). After heating, the test piece was extracted to wipe off the test liquid, and the volume of the test piece was measured. From the results of measurement, the volume change ΔV (%) was calculated using the expression below. A smaller absolute value of the volume change ΔV (%) indicates higher oil resistance.

$$\text{Volume change } \Delta V\ (\%) = \{(\text{volume of test piece after immersed in test liquid} - \text{volume of test piece before immersed in test liquid})/\text{volume of test piece after immersed in test liquid}\} \times 100$$

<Engine oil immersion test for resistance against degraded engine oil>

Each of these test pieces prepared in the same manner as in those used in the evaluations of the normal state physical properties was placed into a glass tube having an inner volume of 250 cc, and 200 cc of a test liquid was poured thereinto. The glass tube was set such that the test piece was completely immersed in the liquid. The glass tube was put into an autoclave, which was placed into a heating vessel, followed by heating at 160°C for 168 hours. The test liquid (degraded engine oil) was prepared by mixing 0.1 g of sulfuric acid (purity: 95%), 1.2 g of nitric acid (purity: 50%), 1.0 g of acetic acid (purity: 99.7%), and 0.04 g of formic acid (purity: 98%) relative to 197.7 g of an engine oil (trade name "Mobil10W-40SM/CF", available from Exxon Mobil Corporation). The concentrations of the acids in the test liquid are

500 ppm for sulfuric acid, 3,000 ppm for nitric acid, 5,000 ppm for acetic acid, and 200 ppm for formic acid. After the heating, the test piece was extracted from the vessel to sufficiently wipe off the adhering test liquid, and then was left under a room temperature condition. Thereafter, the hardness of the test piece was measured, and the result of the measurement was compared to the measured value of the hardness thereof before immersion in the test liquid according to the method to perform evaluation in the degraded engine oil test. The change in hardness corresponds to the difference between the measured value of the hardness (the measured value of one of the normal state physical properties) of the test piece before immersion in the engine oil and the measured value of the test piece after immersion in the engine oil. A smaller change in hardness (difference between these measured values of the hardness) indicates slower progression of degradation and higher resistance against degraded engine oil.

[Production Example 1: antioxidant represented by Formula (A)]

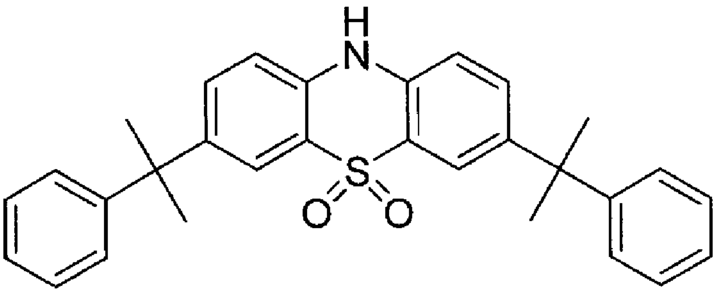

(A)

Initially, 50.0 g (250.92 mmol) of phenothiazine was placed into a three-necked reactor provided with a thermometer in a nitrogen stream, and was dissolved in 200 ml of toluene. Subsequently, 59.31 g (501.83 mmol) of α-methylstyrene and 1.19 g (6.27 mmol) of p-toluenesulfonic acid monohydrate were added to and reacted with this solution at 80°C for 1 hour. Thereafter, the reaction solution was cooled to room temperature, and 48 ml of acetic acid and 85.34 g (752.7 mmol) of a 30% hydrogen peroxide solution were added and reacted at 80°C for another 2 hours. The reaction solution was cooled to room temperature, and 630 ml of methanol was added. The precipitated crystals were filtered, and were rinsed with 320 ml of methanol to give 85.7 g of the antioxidant represented by Formula (A) as a white crystalline compound with a yield of 73%. The structure was identified by $^1$H-NMR. $^1$H-NMR (500 MHz, DMSO-d6, TMS, δppm): 1.67 (s, 12H), 7.15-7.32 (m, 12H), 7.43 (dd, 2H, J = 9.0, 2.0 Hz), 7.68 (d, 2H, J = 1.5 Hz), 10.84 (s, 1H)

[Production Example 2: antioxidant represented by Formula (B)]

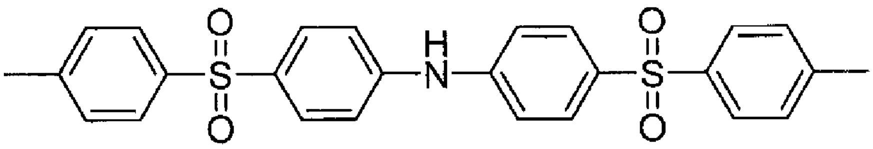

(B)

Step 1: Synthesis of intermediate represented by Formula (B-1)

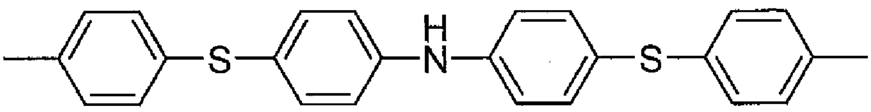

(B-1)

In a two-necked reactor, 15.00 g (35.63 mmol) of bis(4-iodophenyl)amine and 9.29 g (74.82 mmol) of p-toluenethiol were dissolved in 300 ml of toluene in a nitrogen stream. 17.12 g (178.1 mmol) of sodium tert-butoxide and 0.73 g (0.89 mmol) of a [1,1'-bis(diphenylphosphino)ferrocene]-palladium(II) dichloride dichloromethane adduct were added to and reacted with this solution at 80°C for 4 hours. Subsequently, the reaction solution was cooled to room

temperature, and 1000 ml of distilled water and 500 ml of saturated saline water were added, followed by extraction with 500 ml of ethyl acetate. The organic layer was dried over sodium sulfate, was condensed with a rotary evaporator, and was refined by silica gel column chromatography (hexane:tetrahydrofuran = 4:1) to give 8.84 g of an intermediate represented by Formula (B-1) with a yield of 60%. The structure was identified by $^1$H-NMR. $^1$H-NMR (500 MHz, $CDCl_3$, TMS, δppm): δ2.31 (s, 6H), 5.78 (s, 1H), 7.00 (d, 4H, J = 8.5 Hz), 7.08 (d, 4H, J = 8.0 Hz), 7.18 (d, 4H, J = 8.0 Hz), 7.30 (d, 4H, J = 8.5 Hz).

Step 2: Synthesis of antioxidant represented by Formula (B)

8.00 g (19.34 mmol) of the intermediate represented by Formula (B-1) was placed into a two-necked reactor, and was dissolved in 50 ml of THF. 150 ml of acetic acid and 11.08 g (96.71 mmol) of a 30% hydrogen peroxide solution were added to and reacted with this solution at 80°C for 2 hours. Subsequently, the reaction solution was cooled to room temperature, and 500 ml of distilled water and 500 ml of saturated saline water were added, followed by extraction with 500 ml of ethyl acetate. The organic layer was dried over sodium sulfate, was condensed with a rotary evaporator, and was refined by silica gel column chromatography (hexane:tetrahydrofuran = 1:1) to give 8.35 g of an antioxidant represented by Formula (B) having a melting point of 225°C with a yield of 90%. The structure was identified by $^1$H-NMR. $^1$H-NMR (500 MHz, DMSO-d6, TMS, δppm): δ2.36 (s, 6H), 7.26 (d, 4H, J = 9.0 Hz), 7.40 (d, 4H, J = 8.0 Hz), 7.78-7.80 (m, 8H), 9.44 (s, 1H) .

[Production Example 3: antioxidant represented by Formula (C)]

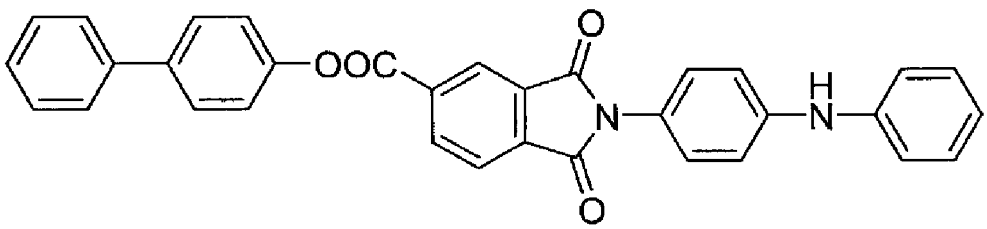

(C)

Step 1: Synthesis of intermediate represented by Formula (C-1)

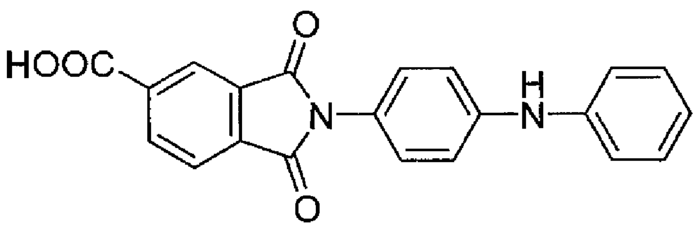

(C-1)

In a four-necked reactor provided with a cooler and a thermometer, 80 g (0.42 mol) of trimellitic anhydride and 76.7 g (0.42 mol) of 4-aminodiphenylamine were dissolved in 1 liter of acetic acid in a nitrogen stream. This solution was reacted in an oil bath for 10 hours with heating under reflux. After the reaction was completed, the reaction solution was added to 2 liters of water to precipitate solids. Subsequently, the precipitated solids were subjected to suction filtration. The residue was washed with water and then methanol, and was dried with a vacuum dryer to give 138.5 g of an intermediate represented by Formula (C-1) as a yellow green solid (yield: 92%). The structure was identified by $^1$H-NMR. $^1$H-NMR (500 MHz, THF-d8, TMS, δppm): 6.97 (t, 1H, J = 7.0 Hz), 7.24-7.28 (m, 4H), 7.33-7.36 (m, 2H), 7.40-7.42 (m, 2H), 7.68 (s, 1H), 8.11 (d, 1H, J = 8.5 Hz), 8.56-8.58 (m, 2H), 12.20 (bs, 1H).

Step 2: Synthesis of antioxidant represented by Formula (C)

In a four-necked reactor provided with a cooler, a thermometer, and a dropping funnel, 10 g (0.028 mol) of the intermediate represented by Formula (C-1), 5.7 g (0.033 mol) of 4-hydroxybiphenyl, and 400 mg (0.0033 mol) of N,N-dimethyl-4-aminopyridine were dissolved in 150 ml of N-methylpyrrolidone in a nitrogen stream. Under room temperature, 6.4 g (0.033 mol) of 1-ethyl-3-(3-dimethylaminopropyl)carbodiimide hydrochloride (WSC) was added to this solution. Subsequently, the compounds were reacted under room temperature for 14 hours. After the reaction was completed, the reaction solution was added to water to precipitate solids. The precipitated solids were subjected to suction filtration. The resulting solids were again dissolved in 100 ml of N-methylpyrrolidone, and the solution was gradually added to 1 liter of methanol to precipitate solids. The precipitated solids were subjected to suction filtration, and the residue was washed with methanol. Furthermore, the resulting solids were again dissolved in 100 ml of N-methylpyrrolidone, and the solution was gradually added to 1 liter of methanol to precipitate solids. The precipitated solids were subjected to suction filtration, and the residue was washed with methanol. The obtained residue was dried with a vacuum dryer to give 12.1 g of the antioxidant represented by Formula (C) as a yellow solid (yield: 85%). The structure was identified by $^1$H-NMR. $^1$H-NMR (500 MHz, DMF-d7, TMS, δppm): 6.92 (t, 1H, J = 7.5 Hz), 7.25 (d, 2H, J = 7.5 Hz), 7.29-7.33 (m, 4H), 7.41-7.44 (m, 3H), 7.52 (t, 2H, J = 8.0 Hz), 7.57 (d, 2H, J = 9.0 Hz), 7.77 (dd, 2H, J = 1.0 Hz, 8.5 Hz), 7.87 (d, 2H, J = 11.5 Hz), 8.22 (d, 1H, J = 13.5 Hz), 8.49 (s, 1H), 8.58-8.59 (m, 1H), 8.71 (dd, 1H, J = 1.5 Hz, 7.5 Hz).

[Production Example 4: antioxidant represented by Formula (D)]

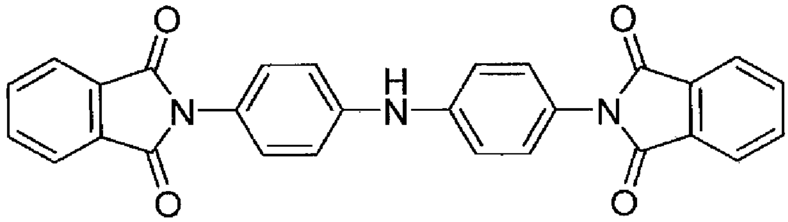

(D)

15.00 g of 4,4'-diaminodiphenylamine sulfate hydrate, 16.46 g of phthalic anhydride, 140 cc of acetic acid, and 70 cc of N-methylpyrrolidinone were placed into a 500-cc four-necked flask provided with a reflux cooler, followed by heating at 125°C for 2.5 hours. After the heating was completed, the reaction solution was cooled to room temperature, 140 cc of methanol was added, and the precipitate was filtered out. The obtained precipitate was washed with 120 cc of methanol, was suspended in 140 cc of N-methylpyrrolidinone, and was dissolved by heating to 100°C. After this solution was cooled to room temperature, 280 cc of methanol was added, and the precipitate was filtered out. The obtained precipitate was washed with 130 cc of methanol, and was dried under reduced pressure to give 18.53 g of the antioxidant represented by Formula (D) with a yield of 80%. The structure was identified by $^1$H-NMR. $^1$H-NMR (500 MHz, DMSO-d6, TMS, δppm): δ7.25 (dd, J = 2.0, 6.5 Hz, 4H), 7.31 (dd, J = 2.0, 6.5 Hz, 4H), 7.90 (dd, J = 3.0, 5.5 Hz, 4H), 7.96 (dd, J = 3.0, 5.5 Hz, 4H), 8.65 (s, 1H).

[Example 1]

200 parts of water, 3 parts of sodium lauryl sulfate, 70.5 parts of n-butyl acrylate, 6 parts of ethyl acrylate, 22 parts of ethyl methacrylate, and 1.5 parts of mono-n-butyl maleate were placed into a polymerization reactor provided with a thermometer and a stirrer, and oxygen was sufficiently removed by performing degassing under reduced pressure and purging with nitrogen twice. Subsequently, 0.005 parts of cumene hydroperoxide and 0.002 parts of sodium formaldehydesulfoxylate were added to initiate emulsion polymerization under normal pressure at a temperature of 30°C. The reaction was continued until the polymerization conversion ratio reached 95%, and a polymerization terminator was added to terminate polymerization. In the next step, the resulting emulsion polymerization solution was solidified with a calcium chloride aqueous solution. The product was washed with water, and was dried to give an acrylic rubber (α-1).

[Examples 2 to 11]

Acrylic rubbers (α-2) to (α-11) having monomer compositions shown in Table 1 were prepared in the same manner as in Example 1.

[Comparative Examples 1 to 10]

Acrylic rubbers (α-12) to (α-21) having monomer compositions shown in Table 2 were prepared in the same manner as in Example 1 except that the monomers and the amounts thereof used in polymerization were varied.

[Table 1]

Table 1

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Acrylic rubber | | ($\alpha$-1) | ($\alpha$-2) | ($\alpha$-3) | ($\alpha$-4) | ($\alpha$-5) | ($\alpha$-6) | ($\alpha$-7) | ($\alpha$-8) | ($\alpha$-9) | ($\alpha$-10) | ($\alpha$-11) |
| Composition (wt%) of acrylic rubber | | | | | | | | | | | | |
| | Ethyl acrylate unit | 6 | 12 | 18 | 9 | 17 | 10 | - | - | - | - | - |
| | n-Butyl acrylate unit | 70.5 | 64.5 | 58.5 | 63.5 | 55.5 | 59.5 | 61.5 | 58.5 | 64.5 | 65.1 | 63.6 |
| | 2-Methoxyethyl acrylate unit | - | - | - | - | - | - | 3 | 6 | - | - | - |
| | Methyl methacrylate unit | - | - | - | - | - | - | - | - | - | - | - |
| | Ethyl methacrylate unit | 22 | 22 | 22 | 26 | 26 | 29 | 34 | 34 | 34 | 34 | 34 |
| | n-Butyl methacrylate unit | - | - | - | - | - | - | - | - | - | - | - |
| | Monobutyl maleate unit | 1.5 | 1.5 | 1.5 | 1.5 | 1.5 | 1.5 | 1.5 | 1.5 | 1.5 | 0.9 | 2.4 |
| | Allyl glycidyl ether unit | - | - | - | - | - | - | - | - | - | - | - |

[Table 2]

Table 2

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Acrylic rubber | | ($\alpha$-12) | ($\alpha$-13) | ($\alpha$-14) | ($\alpha$-15) | ($\alpha$-16) | ($\alpha$-17) | ($\alpha$-18) | ($\alpha$-19) | ($\alpha$-20) | ($\alpha$-21) |
| Composition (wt%) of acrylic rubber | | | | | | | | | | | |
| | Ethyl acrylate unit | 25 | 20 | - | 30 | - | 4.5 | 7.5 | - | 42 | 58 |
| | n-Butyl acrylate unit | 53.5 | 44.5 | 78.5 | 56.5 | 53.5 | 65 | 54 | 72 | 36.7 | 40.5 |
| | 2-Methoxyethyl acrylate unit | - | - | - | - | - | 11 | 11 | | - | - |
| | Methyl methacrylate unit | - | - | - | - | - | 18 | 26 | | - | - |
| | Ethyl methacrylate unit | 20 | 34 | 20 | 12 | 45 | - | - | 26.5 | - | - |
| | n-Butyl methacrylate unit | - | - | - | - | - | - | - | | 19.8 | - |
| | Monobutyl maleate unit | 1.5 | 1.5 | 1.5 | 1.5 | 1.5 | 1.5 | 1.5 | | 1.5 | 1.5 |
| | Allyl glycidyl ether unit | - | - | - | - | - | - | - | 1.5 | - | - |

[Example 12]

60 parts of FEF carbon black (trade name "SEAST SO", available from Tokai Carbon Co., Ltd., filler, "SEAST" is a registered trademark), 1 part of stearic acid (trade name "Stearic acid Sakura", available from NOF CORPORATION, lubricant), 1 part of an ester wax (trade name "Gregg G-8205", available from DIC Corporation, lubricant), and 2 parts of 4,4'-bis($\alpha$,$\alpha$-dimethylbenzyl)diphenylamine (trade name "NOCRAC CD", available from Ouchi Shinko Chemical Industrial Co., Ltd., antioxidant, "NOCRAC" is a registered trademark) were added to 100 parts of the acrylic rubber ($\alpha$-1) prepared in Example 1, and these were mixed at 50°C for 5 minutes using a Banbury mixer. In the next step, the

mixture was transferred to a roll at 50°C, and 1 part of 2,2-bis[4-(4-aminophenoxy)phenyl]propane (trade name "BAPP", available from Wakayama Seika Kogyo Co., Ltd., cross-linking agent) and 2 parts of 1,3-di-o-tolylguanidine (trade name "NOCCELER DT", available from Ouchi Shinko Chemical Industrial Co., Ltd., cross-linking accelerator, "NOCCELER" is a registered trademark) were compounded and kneaded with the mixture to prepare an acrylic rubber composition. The resulting acrylic rubber composition was measured for the Mooney viscosity (ML1+4, 100°C) by the method described above. Using the acrylic rubber composition, test pieces of its cross-linked rubber were prepared by the method described above to evaluate the normal state physical properties (tensile strength, elongation, and hardness) and were evaluated by the heat aging resistance test, the cold resistance test, the oil resistance test, and the engine oil immersion test for resistance against degraded engine oil. The results are shown in Table 3.

[Example 13]

An acrylic rubber composition was prepared in the same manner as in Example 12 except that 1.5 parts of the antioxidant represented by Formula (A), which was prepared in Production Example 1, was used instead of 2 parts of 4,4'-bis(α,α-dimethylbenzyl)diphenylamine, and was evaluated in the same manner as in Example 12. The results are shown in Table 3.

[Examples 14 to 17]

Acrylic rubber compositions were prepared in the same manner as in Example 12 except that the acrylic rubbers (α-2) to (α-5) prepared in Examples 2 to 5 were used instead of the acrylic rubber (α-1), and were evaluated in the same manner as in Example 12. The results are shown in Table 3.

[Example 18]

An acrylic rubber composition was prepared in the same manner as in Example 17 except that 1.5 parts of the antioxidant represented by Formula (A), which was prepared in Production Example 1, was used instead of 2 parts of 4,4'-bis(α,α-dimethylbenzyl)diphenylamine, and was evaluated in the same manner as in Example 17. The results are shown in Table 3.

[Examples 19 to 22]

Acrylic rubber compositions were prepared in the same manner as in Example 12 except that the acrylic rubbers (α-6) to (α-9) prepared in Examples 6 to 9 were used instead of the acrylic rubber (α-1), and were evaluated in the same manner as in Example 12. The results are shown in Table 3.

[Examples 23 to 25]

Acrylic rubber compositions were prepared in the same manner as in Example 22 except that instead of 2 parts of 4,4'-bis(α,α-dimethylbenzyl)diphenylamine, the antioxidant represented by Formula (A), which was prepared in Production Example 1, was used in an amount of 0.5 parts (Example 23), 1.5 parts (Example 24), and 2.5 parts (Example 25), respectively, and were evaluated in the same manner as in Example 22. The results are shown in Table 3.

[Example 26]

An acrylic rubber composition was prepared in the same manner as in Example 22 except that 2.5 parts of the antioxidant represented by Formula (B), which was prepared in Production Example 2, was used instead of 2 parts of 4,4'-bis(α,α-dimethylbenzyl)diphenylamine, and was evaluated in the same manner as in Example 22. The results are shown in Table 3.

[Example 27]

An acrylic rubber composition was prepared in the same manner as in Example 22 except that 2.5 parts of the antioxidant represented by Formula (C), which was prepared in Production Example 3, was used instead of 2 parts of 4,4'-bis(α,α-dimethylbenzyl)diphenylamine, and was evaluated in the same manner as in Example 22. The results are shown in Table 3.

[Example 28]

An acrylic rubber composition was prepared in the same manner as in Example 22 except that 2.5 parts of the antioxidant represented by Formula (D), which was prepared in Production Example 4, was used instead of 2 parts of 4,4'-bis(α,α-dimethylbenzyl)diphenylamine, and was evaluated in the same manner as in Example 22. The results are shown in Table 3.

[Examples 29 and 30]

Acrylic rubber compositions were prepared in the same manner as in Example 12 except that the acrylic rubbers (α-10) and (α-11) prepared in Examples 10 and 11 were used instead of the acrylic rubber (α-1), and were evaluated in the same manner as in Example 12. The results are shown in Table 3.

[Comparative Examples 11 to 17]

Acrylic rubber compositions were prepared in the same manner as in Example 12 except that the acrylic rubbers (α-12) to (α-18) prepared in Comparative Examples 1 to 7 were used instead of the acrylic rubber (α-1), and were evaluated in the same manner as in Example 12. The results are shown in Table 4.

[Comparative Example 18]

An acrylic rubber composition was prepared in the same manner as in Example 12 except that the acrylic rubber (α-19) prepared in Comparative Example 8 was used instead of the acrylic rubber (α-1), the ester wax was not compounded, and 1.1 parts of ammonium benzoate (trade name "VULNOC AB-S", available from Ouchi Shinko Chemical Industrial Co., Ltd., cross-linking agent, "VULNOC" is a registered trademark) was used instead of 1 part of 2,2-bis[4-(4-aminophenoxy)phenyl]propane (cross-linking agent) and 2 parts of 1,3-di-o-tolylguanidine (cross-linking accelerator), and was evaluated in the same manner as in Example 12. The results are shown in Table 4.

[Comparative Examples 19 and 20]

Acrylic rubber compositions were prepared in the same manner as in Example 12 except that the acrylic rubbers (α-20) and (α-21) prepared in Comparative Examples 9 and 10 were used instead of the acrylic rubber (α-1), and were evaluated in the same manner as in Example 12. The results are shown in Table 4.

[Comparative Example 21]

An acrylic rubber composition was prepared in the same manner as in Comparative Example 20 except that 1.5 parts of the antioxidant represented by Formula (A), which was prepared in Production Example 1, was used instead of 2 parts of 4,4'-bis(α,α-dimethylbenzyl)diphenylamine, and was evaluated in the same manner as in Comparative Example 20. The results are shown in Table 4.

[Table 3]

Table 3

| | Example | | | | | | | | | | | | | | | | | | |
|---|---|---|---|---|---|---|---|---|---|---|---|---|---|---|---|---|---|---|---|
| | 12 | 13 | 14 | 15 | 16 | 17 | 18 | 19 | 20 | 21 | 22 | 23 | 24 | 25 | 26 | 27 | 28 | 29 | 30 |
| Acrylic rubber | (α-1) | (α-1) | (α-2) | (α-3) | (α-4) | (α-5) | (α-5) | (α-6) | (α-7) | (α-8) | (α-9) | (α-9) | (α-9) | (α-9) | (α-9) | (α-9) | (α-9) | (α-10) | (α-11) |
| Composition (wt%) of acrylic rubber | | | | | | | | | | | | | | | | | | | |
| Ethyl acrylate unit | 6 | 6 | 12 | 18 | 9 | 17 | 17 | 10 | - | - | - | - | - | - | - | - | - | - | - |
| n-Butyl acrylate unit | 70.5 | 70.5 | 64.5 | 58.5 | 63.5 | 55.5 | 55.5 | 59.5 | 61.5 | 58.5 | 64.5 | 64.5 | 64.5 | 64.5 | 64.5 | 64.5 | 64.5 | 65.1 | 63.6 |
| 2-Methoxyethyl acrylate unit | - | - | - | - | - | - | - | - | 3 | 6 | - | - | - | - | - | - | - | - | - |
| Methyl methacrylate unit | - | - | - | - | - | - | - | - | - | - | - | - | - | - | - | - | - | - | - |
| Ethyl methacrylate unit | 22 | 22 | 22 | 22 | 26 | 26 | 26 | 29 | 34 | 34 | 34 | 34 | 34 | 34 | 34 | 34 | 34 | 34 | 34 |
| n-Butyl methacrylate unit | - | - | - | - | - | - | - | - | - | - | - | - | - | - | - | - | - | - | - |
| Monobutyl maleate unit | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 0.9 | 2.4 |
| Allyl glycidyl ether unit | - | - | - | - | - | - | - | - | - | - | - | - | - | - | - | - | - | - | - |
| Composition (parts) of acrylic rubber composition | | | | | | | | | | | | | | | | | | | |
| Acrylic rubber | 100 | 100 | 100 | 100 | 100 | 100 | 100 | 100 | 100 | 100 | 100 | 100 | 100 | 100 | 100 | 100 | 100 | 100 | 100 |
| FEF carbon black (filler) | 60 | 60 | 60 | 60 | 60 | 60 | 60 | 60 | 60 | 60 | 60 | 60 | 60 | 60 | 60 | 60 | 60 | 60 | 60 |
| Stearic acid (lubricant) | 1 | 1 | 1 | 1 | 1 | 1 | 1 | 1 | 1 | 1 | 1 | 1 | 1 | 1 | 1 | 1 | 1 | 1 | 1 |
| Ester wax (lubricant) | 1 | 1 | 1 | 1 | 1 | 1 | 1 | 1 | 1 | 1 | 1 | 1 | 1 | 1 | 1 | 1 | 1 | 1 | 1 |
| 4,4'-Bis(α,α-dimethylbenzyl)diphenylamine (antioxidant) | 2 | - | 2 | 2 | 2 | 2 | - | 2 | 2 | 2 | 2 | - | - | - | - | - | - | 2 | 2 |
| Antioxidant represented by Formula (A) | - | 1.5 | - | - | - | - | 1.5 | - | - | - | - | 0.5 | 1.5 | 2.5 | - | - | - | - | - |
| Antioxidant represented by Formula (B) | - | - | - | - | - | - | - | - | - | - | - | - | - | - | 2.5 | - | - | - | - |
| Antioxidant represented by Formula (C) | - | - | - | - | - | - | - | - | - | - | - | - | - | - | - | 2.5 | - | - | - |
| Antioxidant represented by Formula (D) | - | - | - | - | - | - | - | - | - | - | - | - | - | - | - | - | 2.5 | - | - |
| BAPP (cross-linking agent) | 1 | 1 | 1 | 1 | 1 | 1 | 1 | 1 | 1 | 1 | 1 | 1 | 1 | 1 | 1 | 1 | 1 | 1 | 1 |
| 1,3-Di-o-tolylguanidine (cross-linking accelerator) | 2 | 2 | 2 | 2 | 2 | 2 | 2 | 2 | 2 | 2 | 2 | 2 | 2 | 2 | 2 | 2 | 2 | 2 | 2 |
| Ammonium benzoate | - | - | - | - | - | - | - | - | - | - | - | - | - | - | - | - | - | - | - |
| Compound Mooney viscosity (100°C) | | | | | | | | | | | | | | | | | | | |
| ML1+4 | 56 | 57 | 58 | 60 | 58 | 60 | 60 | 59 | 60 | 60 | 59 | 59 | 58 | 62 | 60 | 61 | 61 | 59 | 60 |
| Normal state physical properties | | | | | | | | | | | | | | | | | | | |
| Tensile strength (MPa) | 10.4 | 10.5 | 10.7 | 10.9 | 10.4 | 10.6 | 10.7 | 10.9 | 10.4 | 10.4 | 10.2 | 10.2 | 10.4 | 10.4 | 10.1 | 9.9 | 10.5 | 9.3 | 11.0 |
| Elongation (%) | 280 | 290 | 270 | 260 | 270 | 260 | 260 | 280 | 300 | 290 | 310 | 310 | 300 | 290 | 290 | 300 | 280 | 380 | 280 |
| Hardness (DuroA) | 66 | 66 | 66 | 67 | 66 | 67 | 67 | 67 | 70 | 72 | 70 | 69 | 70 | 71 | 70 | 70 | 72 | 70 | 71 |
| Heat aging resistance test (200°C×336h) | | | | | | | | | | | | | | | | | | | |
| Retained elongation (%) | 90 | 140 | 100 | 90 | 110 | 110 | 150 | 120 | 110 | 100 | 130 | 180 | 210 | 210 | 170 | 170 | 200 | 150 | 120 |
| Elongation change (%) | -68 | -52 | -63 | -65 | -59 | -58 | -42 | -57 | -63 | -66 | -58 | -42 | -30 | -28 | -41 | -43 | -29 | -61 | -57 |
| Cold resistance test (TR test) | | | | | | | | | | | | | | | | | | | |
| TR10 (°C) | -25 | -25 | -24 | -22 | -22 | -20 | -20 | -20 | -18 | -17 | -18 | -18 | -18 | -18 | -18 | -18 | -18 | -18 | -17 |
| Oil resistance test (5W-30, 150°C×72hr) | | | | | | | | | | | | | | | | | | | |
| Volume change ΔV (%) | 13 | 13 | 11 | 9 | 12 | 10 | 10 | 12 | 13 | 13 | 14 | 14 | 14 | 14 | 14 | 14 | 14 | 14 | 14 |
| Engine oil immersion test for resistance against degraded engine oil (degraded oil, 160°C×168h) | | | | | | | | | | | | | | | | | | | |
| Change in hardness | 14 | 14 | 15 | 17 | 11 | 14 | 14 | 10 | 11 | 13 | 7 | 7 | 6 | 6 | 8 | 8 | 8 | 7 | 8 |

[Table 4]

Table 4

| | Comparative Example | | | | | | | | | | |
|---|---|---|---|---|---|---|---|---|---|---|---|
| | 11 | 12 | 13 | 14 | 15 | 16 | 17 | 16 | 19 | 20 | 21 |
| Acrylic rubber | (α-12) | (α-13) | (α-14) | (α-15) | (α-16) | (α-17) | (α-18) | (α-19) | (α-20) | (α-21) | (α-21) |
| Composition (wt%) of acrylic rubber | | | | | | | | | | | |
| Ethyl acrylate unit | 25 | 20 | - | 30 | - | 4.5 | 7.5 | - | 42 | 58 | 58 |
| n-Butyl acrylate unit | 53.5 | 44.5 | 78.5 | 56.5 | 53.5 | 65 | 54 | 72 | 36.7 | 40.5 | 40.5 |
| 2-Methoxyethyl acrylate unit | - | - | - | - | - | 11 | 11 | - | - | - | - |
| Methyl methacrylate unit | | | | | | 18 | 26 | | | | |
| Ethyl methacrylate unit | 20 | 34 | 20 | 12 | 45 | - | - | 26.5 | - | | |
| n-Butyl methacrylate unit | - | - | - | - | - | - | - | - | 19.8 | - | - |
| Monobutyl maleate unit | 1.5 | 1.5 | 1.5 | 1.5 | 1.5 | 1.5 | 1.5 | - | 1.5 | 1.5 | 1.5 |
| Allyl glycidyl ether unit | - | - | - | - | - | - | | 1.5 | - | - | - |
| Composition (parts) of acrylic rubber composition | | | | | | | | | | | |
| Acrylic rubber | 100 | 100 | 100 | 100 | 100 | 100 | 100 | 100 | 100 | 100 | 100 |
| FEF carbon black (filler) | 60 | 60 | 60 | 60 | 60 | 60 | 60 | 60 | 60 | 60 | 60 |
| Stearic acid (lubricant) | 1 | 1 | 1 | 1 | 1 | 1 | 1 | 1 | 1 | 1 | 1 |
| Ester wax (lubricant) | 1 | 1 | 1 | 1 | 1 | 1 | 1 | - | 1 | 1 | 1 |
| 4,4'-Bis(α,α-dimethylbenzyl) diphenylamine (antioxidant) | 2 | 2 | 2 | 2 | 2 | 2 | 2 | 2 | 2 | 2 | - |
| Antioxidant represented by Formula (A) | | | | | | | | | | | 1.5 |
| Antioxidant represented by Formula (B) | | | | | | | | | | | - |
| Antioxidant represented by Formula(C) | | | | | | | | | | | |
| Antioxidant represented by Formula (D) | - | - | - | - | - | - | - | | - | - | - |
| BAPP (cross-linking agent) | 1 | 1 | 1 | 1 | 1 | 1 | 1 | | 1 | 1 | 1 |
| 1,3-Di-o-tolylguanidine (cross-linking accelerator) | 2 | 2 | 2 | 2 | 2 | 2 | 2 | - | 2 | 2 | 2 |
| Ammonium benzoate | - | - | - | - | - | - | - | 1.1 | - | - | - |
| Compound Mooney viscosity (100°C) | | | | | | | | | | | |
| ML1+4 | 60 | 62 | 56 | 61 | 69 | 68 | 72 | 55 | 52 | 56 | 60 |
| Normal state physical properties | | | | | | | | | | | |

(continued)

| | Comparative Example | | | | | | | | | | |
|---|---|---|---|---|---|---|---|---|---|---|---|
| | 11 | 12 | 13 | 14 | 15 | 16 | 17 | 16 | 19 | 20 | 21 |
| Tensile strength (MPa) | 10.9 | 10.9 | 9.8 | 10.8 | 12.2 | 11.2 | 12.2 | 10.5 | 9.3 | 10 | 9.8 |
| Elongation (%) | 250 | 270 | 310 | 240 | 290 | 230 | 250 | 310 | 240 | 250 | 240 |
| Hardness (DuroA) | 68 | 70 | 65 | 66 | 77 | 72 | 74 | 67 | 65 | 65 | 65 |
| Heat aging resistance test (200°C×336h) | | | | | | | | | | | |
| Retained elongation (%) | 70 | 140 | 80 | 50 | 170 | 50 | 80 | 10 | 60 | 40 | 60 |
| Elongation change (%) | -72 | -48 | -74 | -79 | -41 | -78 | -68 | -97 | -75 | -84 | -75 |
| Cold resistance test (TR test) | | | | | | | | | | | |
| TR10 (°C) | -22 | -10 | -27 | -26 | -8 | -22 | -11 | -23 | -21 | -26 | -26 |
| Oil resistance test (5W-30, 150°C×72hr) | | | | | | | | | | | |
| Volume change ΔV (%) | 7 | 7 | 17 | 6 | 12 | 6 | 4 | 16 | 8 | 3 | 3 |
| Engine oil immersion test for resistance against degraded engine oil (degraded oil, 160°C×168h) | | | | | | | | | | | |
| Change in hardness | 20 | 15 | 15 | 25 | 6 | 22 | 18 | 14 | 21 | 37 | 37 |

Table 3 shows that the cross-linked rubbers prepared from the acrylic rubbers comprising 20 to 35% by weight of the ethyl methacrylate units (a), 0 to 20% by weight of the ethyl acrylate units (b), 50 to 75% by weight of the n-butyl acrylate units (c), and 0.5 to 4% by weight of the carboxyl group-containing monomer units (d) had high heat resistance, high oil resistance, high cold resistance, and high resistance against degraded engine oil in a good balance (Examples 12 to 30).

In contrast, Table 4 shows that the cross-linked rubbers prepared from the acrylic rubbers containing the ethyl acrylate units in a large proportion had reduced resistance against degraded engine oil (Comparative Examples 11, 14, and 19 to 21). The cross-linked rubber prepared from the acrylic rubber containing the n-butyl acrylate units in a low proportion had reduced cold resistance (Comparative Example 12). The cross-linked rubber prepared from the acrylic rubber containing the n-butyl acrylate units in a large proportion had reduced heat resistance and oil resistance (Comparative Example 13). The cross-linked rubbers prepared from the acrylic rubber containing the ethyl methacrylate units in a low proportion or no ethyl methacrylate units had the heat resistance, the cold resistance, and the resistance against degraded engine oil out of balance (Comparative Examples 14 and 16 to 21). The cross-linked rubber prepared from the acrylic rubber containing the ethyl methacrylate units in a large proportion had reduced cold resistance (Comparative Example 15). The cross-linked rubber prepared from the acrylic rubber without the carboxyl group-containing monomer units had reduced heat resistance and oil resistance (Comparative Example 18).

**Claims**

**1.** An acrylic rubber, comprising:

20 to 35% by weight of ethyl methacrylate units (a);
0 to 20% by weight of ethyl acrylate units (b);
50 to 75% by weight of n-butyl acrylate units (c); and
0.5 to 4% by weight of carboxyl group-containing monomer units (d).

**2.** The acrylic rubber according to claim 1, further comprising 0.01 to 10% by weight of 2-methoxyethyl acrylate units (e).

**3.** An acrylic rubber composition comprising the acrylic rubber according to claim 1 or 2 and an antioxidant,

wherein the antioxidant is at least one of compounds represented by General Formulae (1) to (4), and
the content of the antioxidant is 0.1 to 5 parts by weight relative to 100 parts by weight of the acrylic rubber:

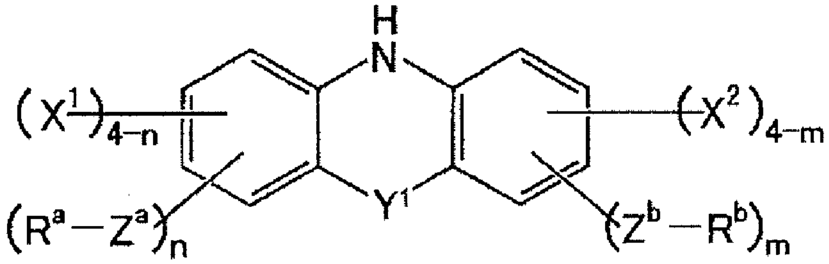

(1)

where, in General Formula (1), $Y^1$ represents a chemical single bond, - S(=O)-, or $-SO_2-$; $R^a$ and $R^b$ each independently represent a $C_1$ to $C_{30}$ organic group which may have a substituent; $Z^a$ and $Z^b$ each independently represent a chemical single bond or $-SO_2-$; $X^1$ and $X^2$ each independently represent a hydrogen atom, a halogen atom, a $C_1$ to $C_{10}$ alkyl group which may have a substituent, a cyano group, a nitro group, $-OR^1$, $-O-C(=O)-R^1$, $-C(=O)-OR^1$, - O-C (=O)-$OR^1$, $-NR^2(R^3)$, $-NR^2-C(=O)-R^1$, $-C(=O)-NR^2(R^3)$, or $-O-C(=O)-NR^2(R^3)$, where $R^1$, $R^2$, and $R^3$ each independently represent a hydrogen atom or a $C_1$ to $C_{20}$ organic group which may have a substituent; "n" and "m" each independently represent an integer of 0 to 2, and one of "n" and "m" is not 0; and when "n" and/or "m" is 2, two $R^a$s and two $R^b$s each may be the same or different;

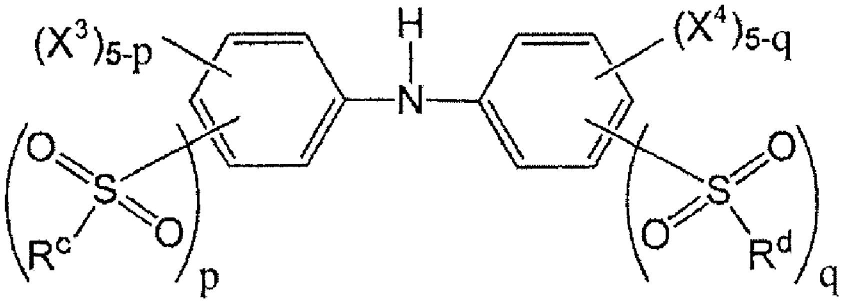

(2)

where, in General Formula (2), $R^c$ and $R^d$ each independently represent a $C_1$ to $C_{30}$ organic group which may have a substituent; $X^3$ and $X^4$ each independently represent a hydrogen atom, a halogen atom, a $C_1$ to $C_{10}$ alkyl group which may have a substituent, a cyano group, a nitro group, $-OR^4$, - O-C(=O)-$R^4$, $-C(=O)-OR^4$, -O-C(=O)-$OR^4$, -NR-$^5(R^6)$, $-NR^5-C(=O)-R^4$, $-C(=O)-NR^5(R^6)$, or $-O-C(=O)-NR^5(R^6)$, where $R^4$, $R^5$, and $R^6$ each independently represent a hydrogen atom or a $C_1$ to $C_{20}$ organic group which may have a substituent; and "p" and "q" each independently represent 0 or 1, and at least one of "p" and "q" is 1;

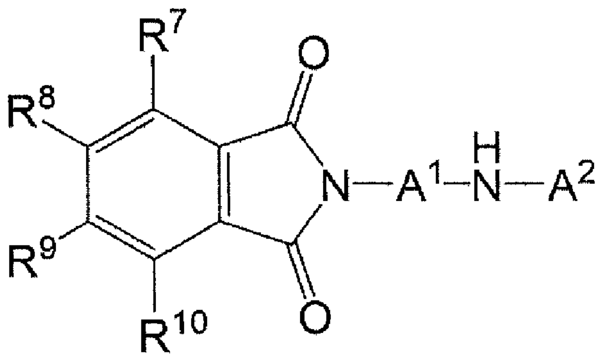

(3)

where, in General Formula (3), $A^1$ and $A^2$ each independently represent a $C_1$ to $C_{30}$ aromatic group which may have a substituent; $R^7$, $R^9$, and $R^{10}$ each independently represent a hydrogen atom, a halogen atom, a $C_1$ to $C_{10}$ alkyl group which may have a substituent, a cyano group, a nitro group, $-OR^{1a}$, - O-C(=O)-$R^{1a}$, $-C(=O)-OR^{1a}$, $-O-C(=O)-OR^{1a}$, $-NR^{1b}-C(=O)-R^{1a}$, $-C(=O)-NR^{1a}R^{1c}$, or $-O-C(=O)-NR^{1a}R^{1c}$; $R^{1a}$ and $R^{1c}$ each independently represent a hydrogen atom or a $C_1$ to $C_{30}$ organic group which may have a substituent; each $R^{1b}$ independently represents a hydrogen atom or a $C_1$ to $C_6$ alkyl group; the $C_1$ to $C_{30}$ organic group forming $R^{1a}$ and $R^{1c}$ may include at least one linking group selected from the group consisting of -O-, -S-, -O-C(=O)-, -C(=O)-O-, -O-C(=O)-O-, $-NR^{1d}-C(=O)-$, $-C(=O)-NR^{1d}-$, $-NR^{1d}-$, and -C(=O)-, except for the case where a linking group consisting of two or more adjacent -O- or -S- groups is included; each $R^{1d}$ independently represents a hydrogen atom or a $C_1$ to $C_6$ alkyl group; $R^8$ represents a hydrogen atom, a halogen atom, a $C_1$ to $C_{10}$ alkyl group which may have a substituent, a cyano group, a nitro group, - O-C(=O)-$R^{1e}$, -C(=O)-O$R^{1e}$, -NR-C(=O)-$R^{1e}$, -C(=O)-N$R^{1e}R^{1f}$, or -O-C(=O)-N$R^{1e}R^{1f}$; $R^{1e}$ and $R^{1f}$ each independently represent a $C_1$ to $C_{30}$ organic group which may have a substituent; the $C_1$ to $C_{30}$ organic group forming $R^{1e}$ and $R^{1f}$ may include at least one linking group selected from the group consisting of - O-, -S-, -O-C(=O)-, -C(=O)-O-, -O-C(=O)-O-, -N$R^{1d}$-C(=O)-, -C(=O)-N$R^{1d}$-, - N$R^{1d}$-, and -C(=O)-, except for the case where a linking group consisting of two or more adjacent -O- or -S- groups is included; and $R^{1b}$ and $R^{1d}$ each independently represent a hydrogen atom or a $C_1$ to $C_6$ alkyl group; and

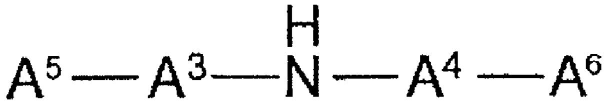

(4)

where, in General Formula (4), $A^3$ and $A^4$ each independently represent a $C_6$ to $C_{18}$ arylene group which may have a substituent, and $A^5$ and $A^6$ each independently represent an organic group having a cyclic imide structure which may have a substituent.

**4.** The acrylic rubber composition according to claim 3, wherein the content of the antioxidant is 0.3 to 3.5 parts by weight relative to 100 parts by weight of the acrylic rubber.

**5.** The acrylic rubber composition according to claim 3 or claim 4, wherein the compound represented by General Formula (1) is a compound represented by General Formula (9):

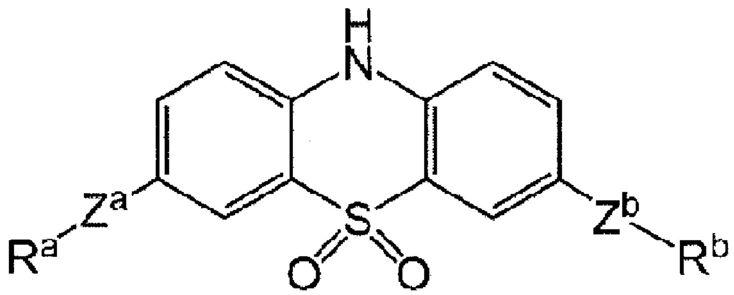

(9)

where, in General Formula (9), $R^a$ and $R^b$ each independently represent a $C_1$ to $C_{30}$ organic group which may have a substituent; and $Z^a$ and $Z^b$ each independently represent a chemical single bond or -$SO_2$-.

**6.** The acrylic rubber composition according to any one of claims 3 to 5, wherein the compound represented by General Formula (2) is a compound represented by General Formula (13):

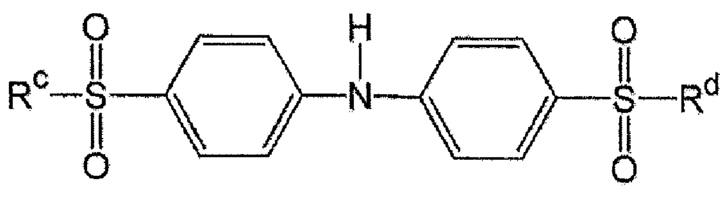

(13)

where, in General Formula (13), $R^c$ and $R^d$ each independently represent a $C_1$ to $C_{30}$ organic group which may have a substituent.

**7.** The acrylic rubber composition according to any one of claims 3 to 6, wherein the compound represented by General Formula (3) is a compound represented by General Formula (14):

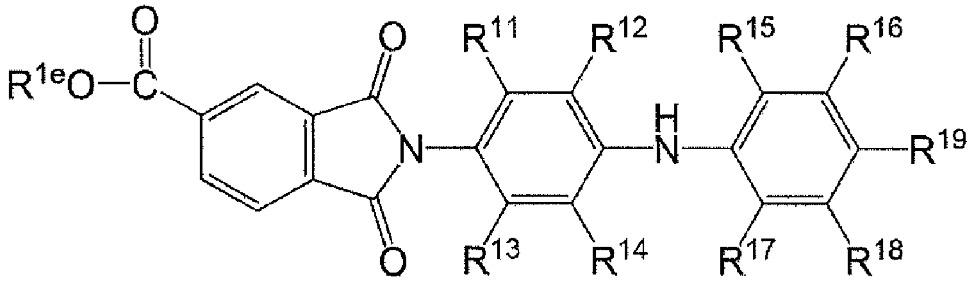

(14)

where, in General Formula (14), $R^{11}$ to $R^{19}$ each independently represent a hydrogen atom, a $C_1$ to $C_{10}$ alkyl group, a halogen-substituted $C_1$ to $C_{10}$ alkyl group, a halogen atom, a cyano group, or a nitro group; $R^{1e}$ represents a $C_1$ to $C_{30}$ organic group which may have a substituent; the $C_1$ to $C_{30}$ organic group forming $R^{1e}$ may include at least one linking group selected from the group consisting of -O-, -S-, -O-C(=O)-, -C(=O)-O-, -O-C(=O)-O-, -$NR^{1d}$-C(=O)-, -C(=O)-$NR^{1d}$-, -$NR^{1d}$-, and -C(=O)-, except for the case where a linking group consisting of two or more adjacent -O- or -S-groups is included; and each $R^{1d}$ independently represents a hydrogen atom or a $C_1$ to $C_6$ alkyl group.

8. The acrylic rubber composition according to any one of claims 3 to 7,
wherein the compound represented by General Formula (4) is a compound represented by General Formula (24):

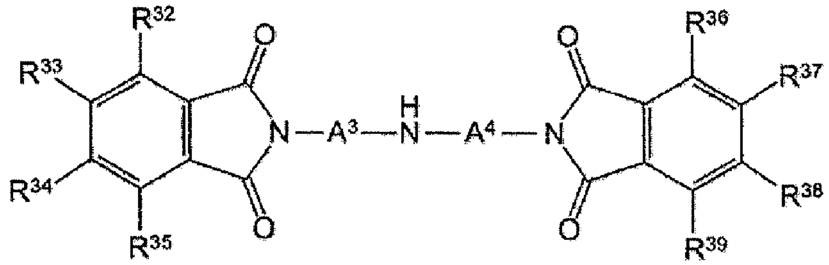

(24)

where, in General Formula (24), $R^{32}$ to $R^{39}$ each independently represent a hydrogen atom, a $C_1$ to $C_{30}$ alkyl group, a $C_1$ to $C_{30}$ alkenyl group, -$OR^{44}$, -O-C(=O)-$R^{44}$, -C(=O)-$OR^{44}$, -C(=O)-$NR^{44}$($R^{45}$), -$NR^{44}$-C(=O)-$R^{45}$, -CN, -$SR^{44}$, -S-(=O)-$R^{44}$, or -$S(=O)_2$-$R^{44}$, and $R^{44}$ and $R^{45}$ each independently represent a $C_1$ to $C_{30}$ alkyl group, a $C_1$ to $C_{30}$ alkenyl group, or a $C_6$ to $C_{12}$ aromatic group; and $A^3$ and $A^4$ each independently represent a $C_6$ to $C_{18}$ arylene group which may have a substituent.

9. The acrylic rubber composition according to any one of claims 3 to 8, further comprising 0.05 to 20 parts by weight of a cross-linking agent relative to 100 parts by weight of the acrylic rubber.

10. A cross-linked rubber prepared by cross-linking the acrylic rubber composition according to claim 9.

11. The cross-linked rubber according to claim 10, wherein the cross-linked rubber is a hose material or a sealing material.

## INTERNATIONAL SEARCH REPORT

International application No.
PCT/JP2020/024912

A. CLASSIFICATION OF SUBJECT MATTER
C08F 220/18(2006.01)i; C08F 222/02(2006.01)i; C08K 5/17(2006.01)i; C08K 5/3417(2006.01)i; C08K 5/36(2006.01)i; C08K 5/46(2006.01)i; C08L 33/06(2006.01)i; C09K 3/10(2006.01)i
FI: C08F220/18; C08F222/02; C08L33/06; C08K5/46; C08K5/3417; C08K5/36; C08K5/17; C09K3/10 E
According to International Patent Classification (IPC) or to both national classification and IPC

B. FIELDS SEARCHED
Minimum documentation searched (classification system followed by classification symbols)
C08F220/18; C08F222/02; C08K5/17; C08K5/3417; C08K5/36; C08K5/46; C08L33/06; C09K3/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
Japio-GPG/FX CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | WO 2016/002936 A1 (ZEON CORP.) 07.01.2016 (2016-01-07) entire text | 1-11 |
| A | JP 2018-032623 A (KAO CORP.) 01.03.2018 (2018-03-01) entire text | 1-11 |
| A | JP 2008-214418 A (ZEON CORP.) 18.09.2008 (2008-09-18) entire text | 1-11 |
| A | WO 2011/058918 A1 (ZEON CORP.) 19.05.2011 (2011-05-19) entire text | 1-11 |
| A | WO 2011/093444 A1 (ZEON CORP.) 04.08.2011 (2011-08-04) entire text | 1-11 |
| A | WO 2015/141785 A1 (ZEON CORP.) 24.09.2015 (2015-09-24) entire text | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 August 2020 (28.08.2020) | 08 September 2020 (08.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/024912

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/159459 A1 (ZEON CORP.) 07.09.2018 (2018-09-07) entire text | 1-11 |
| A | WO 2015/098911 A1 (ZEON CORP.) 02.07.2015 (2015-07-02) entire text | 1-11 |
| P, X | CN 109942743 A (ZHEJIANG LAIWANG NEW MAT CO., LTD.) 28.06.2019 (2019-06-28) example 8 | 1 |
| P, A | WO 2019/188527 A1 (ZEON CORP.) 03.10.2019 (2019-10-03) entire text | 1-11 |

Form PCT/ISA/210 (continuation of second sheet) (January 2015)

**INTERNATIONAL SEARCH REPORT**
Information on patent family members

International application No.
PCT/JP2020/024912

| Patent Documents referred in the Report | Publication Date | Patent Family | Publication Date |
|---|---|---|---|
| WO 2016/002936 A1 | 07 Jan. 2016 | US 2017/0121439 A1<br>entire text<br>EP 3165544 A1<br>CN 106471019 A<br>KR 10-2017-0028315 A | |
| JP 2018-032623 A | 01 Mar. 2018 | EP 3493305 A1<br>entire text<br>CN 109565051 A<br>KR 10-2019-0037249 A | |
| JP 2008-214418 A | 18 Sep. 2008 | (Family: none) | |
| WO 2011/058918 A1 | 19 May 2011 | (Family: none) | |
| WO 2011/093444 A1 | 04 Aug. 2011 | US 2012/0302674 A1<br>entire text<br>EP 2530119 A1<br>CN 102812083 A<br>KR 10-2012-0108055 A | |
| WO 2015/141785 A1 | 24 Sep. 2015 | (Family: none) | |
| WO 2018/159459 A1 | 07 Sep. 2018 | US 2020/0002507 A1<br>entire text<br>EP 3590923 A1<br>CN 110337431 A<br>KR 10-2019-0126316 A | |
| WO 2015/098911 A1 | 02 Jul. 2015 | (Family: none) | |
| CN 109942743 A | 28 Jun. 2019 | (Family: none) | |
| WO 2019/188527 A1 | 03 Oct. 2019 | AU 2018302151 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018101146 A
- WO 2011093443 A
- WO 2011058918 A
- JP 5732673 B
- WO 2018159459 A